# EUROPEAN PATENT SPECIFICATION

(11) **EP 1 499 004 B1**
(45) Date of publication and mention of the grant of the patent: **12.09.2012**
(21) Application number: 03015650.9
(22) Date of filing: 17.07.2003
(51) Int. Cl.: H02M 3/335

(54) **Method for controlling a synchronous rectifier and synchronous rectifier controller**
Verfahren zur Steuerung eines Synchrongleichrichters und Steuersatz für einen Synchrongleichrichter
Procédé de commande d'un redresseur synchrone et contrôleur pour un redresseur synchrone

(43) Date of publication of application: 19.01.2005
(73) Proprietor: Puls Elektronische Stromversorgungen GmbH, 81925 Munich (DE)
(72) Inventor: Erdl, Bernhard, 81925 München (DE); Kroll, Peter, 09113 Chemnitz (DE)
(74) Representative: HOFFMANN EITLE

(56) References cited:
- WO-A-02/39571
- US-A- 6 021 059
- US-A- 6 069 804
- US-A1- 2001 026 462
- LIBRIZZI F., SCALIA P.: "STSRx FAMILY: MIXED SIGNAL ICs TO DRIVE SYNCHRONOUS RECTIFIERS IN ISOLATED SMPSs" AN1288 APPLICATION NOTE - STMICROELECTRONICS, July 2000 (2000-07), pages 1/20-20/20, XP002265900

## Description

### TECHNICAL FIELD

The present invention generally relates to the field of power conversion and particularly to a method for synchronizing a synchronous rectifier, a synchronous rectifier controller and a power converter employing the method.

### BACKGROUND OF THE INVENTION

Power converters are broadly known to convert input power to one or more DC outputs. The input power of such a power converter may comprise a DC component or may be AC power. Power converters powered by a AC line power are also referred to as power supply.

A typical application of power converters include converting raw input power to a controlled or regulated voltage and/or current for the operation of electronic equipment. Power converter technology is divided into two distinct forms; the linear or series regulator, and the switched-mode conversion technique. Switched-mode technology is multi-faceted with a wide variety of topologies achieving the end result of providing regulated DC voltage or current. The main difference between the linear and switched mode regulators is in the size, weight and efficiency. The linear regulator utilizes simple techniques of controlled energy dissipation to achieve a regulated output voltage independent of line and load variation. This is inherently inefficient, especially in case of the wide input voltage range or in case of varying loads.

Therefore the present invention, which is directed to the increase of efficiency of power converters, merely deals with switched-mode power converters. Such switched-mode power converters include, but are not restricted to, buck converters and boost converters, each comprising switching means, an inductance, rectifier means and capacitor means. Further examples are single switch forward converters, half bridge switch forward converters or full bridge switch forward converters as well as single switch fly-back converters, half bridge fly-back converters and fly-back resonance converters, each of which comprises switching means, transformer including at least one primary and secondary winding, rectifier means and capacitor means. To control the output of such converter, each comprises a controller to control the ON/OFF timing of the switching means depending on the input power and the load. Depending on whether the frequency of the converter is fixed or free running, power converters are divided in free running power converters and resonance power converters including ZERO voltage converters and ZERO current converters.

Generally, switched mode power converters comprise a primary switching means, which is frequently switched ON and OFF depending on the input power characteristics and the load characteristics, wherein the switching means renders an induction in an inductor to be build-up or reduced depending on the conducting state of the switching means. In case of forward converters and fly-back converters, such inductor comprises a transformer wherein the primary switching means of the converter influences the status of the current flowing to the primary winding wherein the electrical power provided at a secondary winding is rectified by a rectifier to provide D/C output voltage. In case the such inductor comprises a transformer, building up induction means magnetization of the transformer core and reducing induction means demagnetization of the transformer core, respectively.

To convey a better understanding of the problems being inherent in state of the art devices and the advantages of the present invention, merely as an example the characteristic relationships with respect to an free running fly-back converter will be described in more detail. In the case of a free running fly-back converter during the ON-time of the primary switch, a transformer core will be charged with energy to an extent as it will be necessary to provide a predetermined target voltage at the output of the power converter depending on its actual load. Provided a constant primary voltage, the induction in the transformer and therefore the magnetization of the core and the current in the primary winding increases linearly with the time until a predetermined limit has been reached. With an opened primary switch, during the succeeding demagnetization of the core, the magnetization of the core and the current in the secondary winding decrease linearly over time until the magnetization of the core becomes ZERO. The end of the demagnetization of the core will be detected by a control unit of the fly-back converter and a new switching cycle starts accordingly.

Both phases, i.e. the magnetization phase and the demagnetization phase of the transformer are influenced by peripheral electrical circumstances of the converter. In general, a higher voltage at any winding, i.e. the secondary winding or the primary winding, will speed up the magnetization or demagnetization, respectively. The pulse duty ratio, i.e. the pulse interval to pulse duration, and the pulse repetition rate of such a free running fly-back converter will be set automatically depending on the values of the primary and secondary inductivity under focus of input voltage and output voltage.

Because of the aforementioned relationships, free running fly-back converters allow the implementation of low-power power supplies with high efficiency. Because of the functional principle there are no additional gaps in the timing during the demagnetization phase of the transformer and caused by this the RMS currents on the primary side and secondary side are small and therefore the efficiency of the converter can be high.

Each of the above-mentioned switched-mode power converters comprises a rectifier to convert internal AC voltage to a DC output voltage. As used herein, the term "rectifier" denotes a device, whose internal structure conducts current in one polarity but blocks current flow in the opposing polarity. Rectifiers comprise diodes and silicon-controlled rectifiers. Rectifier means comprises half wave rectifiers employing a single rectifier or full wave rectifiers employing a transformer, a bridge circuit and two discreet rectifiers for rectifying both half waves of an AC voltage.

Traditional rectifiers use rectifying diodes that conduct the load current only when forward biased in response to the input wave form. However, the voltage drop of a forward biased diode is the main cause of degradation of energy in recent power converters and has therefore a high impact on the efficiency of the power converter. Thus so called synchronous rectifiers have replaced the diodes with controllable switches that are periodically switched ON/OFF in synchronism with the periodic wave form to be rectified. EP 0 973 246 A1 as well as EP 0 339 963 B1 each discloses such a rectifier and power converter employing field effect transistors (FET) as a synchronous switch. The employment of a switched rectifier and in particular the employment of MOS field effect transistors reduce the power losses of the rectifier in a high degree. However, to switch such switched rectifiers ON/OFF in synchronism with the wave form to be rectified, controlling of the switched rectifier is necessary depending on such input voltage wave form of the rectifier.

This is because the switch of the switch rectifier has to be controlled to behave like a diode to avoid cross conduction or shoot-through between switches at the input side and the output side of a power supply. To prevent such cross conduction, i.e. contemporary conduction, of the main switch of a power converter and the synchronous rectifier, the conductivity state of both the main switch of the power converter and the switch of the synchronous rectifier must be complementary.

According to EP 0 973 246 A1 for that purpose a main controller is provided for controlling the main switch of a power converter as well as a driver circuit of the synchronous rectifier switch. Further a control unit for controlling the synchronous rectifier enables/disables turning ON of this synchronous rectifier depending on the control signal of the main controller and a status information of the main switch. In particular, the synchronous rectifier controller is coupled to the power switch and the synchronous rectifier device sensing the status of the power switch and disabling the synchronous rectifier device when the power switch has remained in a nonconducting state for at least a specified period of time. This period of time is chosen to disable, i.e. shut-down the synchronous rectifier device early enough to reduce dissipation of energy at the output of the power converter during a transient condition including non-steady state condition such as start up, turn off or temporary removal of the load. Following the shut-down of the synchronous rectifier device, the synchronous rectifier controller accordingly may enable the synchronous rectifier device when the power switch returns to a conducting state and after a specified period of time.

As mentioned above, in such a power converter the synchronous rectifier controller has to get information about the switching transitions, i.e. turn ON and turn OFF the main switch from the main control circuit. This can be easily implemented in a non-isolated switched mode power converter. However, in case of isolated power supply circuits, when the main switch is controlled on the primary side, the control signal of the main switch will be unavailable on the secondary side. Therefore, this kind of synchronous rectifier controlling cannot be used in such power converters.

Further according to this method for controlling a synchronous rectifier according EP 0 973 246 A1, to avoid any negative effects during a transient condition, death times are deliberately introduced between the last possible shut-down time and the actual shut-down because of disablement of the synchronous rectifier and between the earliest possible switch ON time and the actual switch ON time depending on the enablement of the synchronous rectifier. Since these death times are predetermined there has to be a compromise between high efficiency of the power converter and especially of the synchronous rectifier and the effectiveness of the synchronous rectifier controller with respect to compensation of input voltage fluctuation and/or load fluctuation.

F. Librizzi, F. Lentini; "STSR3 SIMPLIFIES IMPLEMENTATION OF SYNCHRONOUS RECTIFIER IN FLY-BACK CONVERTER", Application mode AN 1624, STMicroelectronics, January 2003 and F. LIBRIZZI-P.SCALLIA; "STSRx FAMILY: MIXED-SIGNAL ICs TO DRIVE SINCHRONOUS RECTIFIERS IN ISOLATED SMPSs"; Application mode AN 1288, STMicroelectronics, July 2000, disclose a synchronous rectifier control for a fly-back converter in continuous and discontinuous mode, respectively. The control of the synchronous rectifier is made cycle-by-cycle, i.e. during one cycle the entire switching period of the power converter and the ON time or OFF time of the main switch are measured and stored to be used for controlling of the synchronous rectifier in the next cycle. Particularly with the start of the demagnetization of the transformer on the secondary side the synchronous rectifier is switched ON. The demagnetisation time predicted by the PWM control is measured by the synchronous rectifier controller by a counter counting up an internal clock cycle during the demagnetization phase. The result of the counter is used during the succeeding clock cycle of the PWM control to fix the expected ON time of the synchronous rectifier. For that purpose the count of the up-mode counter is utilized to derive a starting condition of a down-mode counter counting down the same internal clock pulses to ZERO for shutting-down the synchronous rectifier. To avoid any cross conduction between the synchronous rectifier and the main switch of the power converter, the down-mode counter is manipulated to count up to 225ns shorter than the up-mode counter.

In case of abrupt change of one of the primary voltage, the secondary voltage and the load current, however, the demagnetization time predicted by the PWM control may also change abruptly. Caused by this, when the actual demagnetization time of a cycle is abruptly increased, the ON time of the synchronous rectifier will be shorter with respect to the demagnetization time and, for example in case of MOS transistors as switching means of the synchronous rectifier, the internal body diode of such MOS transistor has to absorb the demagnetization current. Further, in case the demagnetization time of the transformer will be decreased, the synchronous rectifier will be switched OFF after the main switch of the power converter already has been switched ON. This will result in a cross conduction between the main switch of the power converter and the synchronous rectifier.

DE 29 80 1007 U1 discloses a self-controlled synchronous rectifier wherein the control signal of the gate of a MOSFET switch is derived from the A/C voltage to be rectified on the secondary side of the transformer. The switching transistor of the synchronous rectifier is switched ON when the drain source voltage of the switching transistor becomes negative, i.e. the internal body diode becomes conductive, and the switching transistor is switched OFF when the drain source voltage becomes positive. With this type of control the shut-down of the transistor occurs after the swing-out transient of the transformer has started. However, in case of a free-running fly-back converter, for example, the synchronous rectifier has to be shut-down before starting of the swing-out transient to allow detection of the end of the demagnetization in time. If the synchronous rectifier is not switched OFF in time, energy from the secondary capacitor will flow through the transformer to the primary side of the transformer. Caused by this the efficiency of such power converter will decrease and/or the primary switch may be damaged.

EP 06 60 977 B1 discloses a synchronous rectifier circuit comprising a field effect transistor, wherein the gate voltage of this field effect transistor is directly derived from a secondary main or auxiliary winding of the transformer. Such control of the synchronous rectifier overcomes several timing problems. However, such circuit cannot work in case the output voltage will be low or the output of the respective power supply will be shortcircuited.

Accordingly, the main problem of prior art synchronous rectifiers and prior art power converters utilizing such synchronous rectifiers is that the allowable extent of abrupt parameter changes, i.e. changes in the input voltage, the output voltage and/or the load current have to be taken into account when designing a synchronous rectifier controller. In particular, the higher the allowable abrupt changes in the above-mentioned parameters, the larger will be a protection time period, i.e. an ON-time-lag between a possible ON-transient of the synchronous rectifier switching means in a steady state without parameter changing and an actual ON-transient of the synchronous rectifier switching means; and an OFF-time-lag between an actual OFF-transient of the synchronous rectifier switching means and a possible OFF-transient of the synchronous rectifier switching means in a steady state without parameter changing, respectively. Here, a possible transient means a transient, just avoiding cross-conduction between a main switch of a power converter and the rectifier switching means. Such ON-time-lag and such OFF-time-lag each influences the efficiency of the synchronous rectifier and in case such rectifier is utilized in a power converter, also influences the efficiency of such power converter. Specifically the determination of the OFF-timing of a synchronous rectifier switching means, i.e. determination of the time to stop the rectification of an A/C voltage according to prior art synchronous rectifier controllers has a large influence on the efficiency of a respectively controlled synchronous rectifier.

WO 02/39571A1 discloses a power converter having a transformer with primary side and secondary side windings and having primary side and secondary side switches. In order to avoid switching loss the parasitic capacity of the transformer is actively charged before switching. For that purpose the secondary current is sensed and switching is controlled depending on the behaviour of the actually measured current. Determining a stop time is not performed.

Similarly, documents US 2001/026462 A1, US 6 021 059 A and US 6 069 804 A disclose respective methods for controlling a synchronous rectifier and synchronous rectifiers controllers according to the preambles of independent claims 1 and 9.

### SUMMARY OF THE INVENTION

It is, therefore, the main object of the present invention to provide a method for controlling a synchronous rectifier with improved OFF-timing of a switching means of such rectifier, particularly for the case that a current flow to be switched OFF depends on the induction of an inductance or the magnetization status of an transformer. Further aspects of the invention are directed to a respective synchronous rectifier and to a power converter comprising such synchronous rectifier.

The invention is defined by a method for controlling a synchronous rectifier and a synchronous rectifier controller according with the technical features of independent claims 1 and 9.

According to the present invention there is provided a method for controlling a synchronous rectifier for rectifying a voltage supplied from an inductance, the induction of which is periodically built up and reduced. The rectifier may comprise a switching means to be switched ON, i.e. in the conducting state to conduct a current supplied from the inductance during a second time period of reduction of the induction, and to be switched OFF, i.e. blocking during a first time period of building up the induction of the inductance. According to the invention, the method may comprise the step of determining a stop time within the second time period for switching OFF the switching means, the stop time being derived based on a control voltage, the absolute value of which being proportional to the voltage supplied by the inductance, wherein this determining step comprises the steps of: a) detecting the induction value build up during the first time period; b) determining the stop time for switching OFF the switching means in the second time period succeeding the first time period of step a) depending on the induction value detected at the end of the first time period and the time variable absolute value of the control voltage during the second time period.

According to the method of the present invention the detecting step comprises: a) emulating the building up of the induction of the inductance during the first time period to obtain an emulated quantity equivalent to an induction value of the particular first time period depending on the absolute value of the control voltage during this first time period; and the determining step may comprise the steps of: a1) emulating the reduction of the induction of the inductance during the second time period succeeding the first time period of step a) depending on the emulated quantity achieved at the end of the first time period and the absolute value of the control voltage during the second time period; and b) determining the stop time based on the comparison result of the actual emulated quantity to the induction value during the second time period and a predetermined threshold.

In this respect the induction status of an inductance is equivalent to the magnetization status of a transformer in case a transformer comprising a primary winding and a secondary winding is used instead of a single inductor (which is the case in many switched mode power converters, to which the invention is applicable).

A switching means, the turn-off time (stop time) of which is determined according to the invention includes but is not limited to a synchronous rectifier rectification switch of a fly-back converter and synchronous rectifier free-wheeling switch of a forward converter.

The main advantage of such method is that the stop time of the switched rectifier switch and therewith to a certain extend the rectification time within one cycle is controlled depending on the parameters of this particular cycle. This parameters include but are not limited to fixed parameters like the inductance parameters, for example transformer parameters in case the inductance is a transformer, and transient parameters like changes of the voltage to be rectified during the first period of the cycle, residual induction in the inductance, i.e. in case of an transformer residual magnetization at the beginning of the first period, changes of the load current during the second period of the cycle, etc.

According to one variant of this method step a) may comprise integrating the absolute value of the control voltage over time during the first time period.

According to a further variant of this method step a1) may comprise integrating the absolute value of the control voltage over time during the second time period and subtracting the integration result from the final integration result of step a).

Such integrating step include but are not limiting to integration of analogue values, for example utilizing a capacitor and/or an operational amplifier circuit, and integration of digital values including analogue to digital (A/D) conversion.

The subtraction step can for example be realized utilizing the sign of the control voltage but also by any conceivable analogue inversion step or digital subtracting step if applicable.

According to a further development of the aforementioned further variant, step b) may comprise determining the stop time based on the comparison result of the subtraction result of step a1) and a predetermined threshold.

According to yet a further variant of this method step a) may comprise converting the absolute value of the control voltage into a pulse train having a frequency depending on the value of the control voltage and counting up the pulses of the pulse train during the first time period to obtain an upper count value.

According to a further variant of this method step a1) may comprise converting the absolute value of the control voltage into a pulse train having a frequency depending on the value of the control voltage and counting down the pulses of the pulse train during the second time period with a start value depending on the upper count value of the step a). According to a further development of the aforementioned further variant, step b) may comprise determining the stop time based on the comparison result of the count value achieved at step a1) and a predetermined threshold.

Although with the aforementioned variants specific examples are given how to implement A/D conversion, digital integration, and digital subtraction, the present invention is not limited to this particular embodiments. People skilled in the art will appreciate that apart from the mentioned voltage-frequency conversion also other methods of A/D conversion are well known and commercially available, the description of which will therefore be omitted here.

Further, specific examples are given how to integrate, and how to integrate and subtract digital values by counting pulses up and down. However, the present invention is not limited to up/down counting of binary values to integrate digital values over time. People skilled in the art will appreciate that apart from the mentioned pulse counting also other methods of integrating digital values are well known and commercially available, the description of which will therefore be omitted here.

According to the present invention the method further may comprise, before the step of determining a stop time, a step of determining a start time within the second time period for switching ON the switching means, wherein the start time may be derived from a polarity change of the control voltage.

Also according to the present invention there is provided a synchronous rectifier controller for controlling a synchronous rectifier for rectifying a voltage supplied from an inductance, the induction of which being periodically built up and reduced, wherein the synchronous rectifier comprises further to the synchronous rectifier controller a switching means for being switched ON to conduct a current supplied from the inductance during a second time period of reduction of the induction, and for being switched OFF during a first time period of building up the induction of the inductance. The synchronous rectifier controller may determining a start time within the second time period for switching ON the switching means, and may determine a stop time within the second time period for switching OFF the switching means, wherein the stop time may be derived based on a control voltage, the absolute value of which is proportional to the voltage supplied by the inductance. For the purpose to determine the stop time the synchronous rectifier controller comprises: detecting means arranged to detect the induction value build up during the first time period; and determining means arranged to determine the stop time for switching OFF the switching means in the second time period succeeding the first time period depending on the induction value detected by the detecting means at the end of the first time period and the time variable absolute value of the control voltage during the second time period.

According to the controller of the present invention the detecting means comprises emulator means arranged to emulate the building up of the induction of the inductance during the first time period to obtain an emulated quantity equivalent to an induction value of the particular first time period depending on the absolute value of the control voltage during this first time period; and the determining means comprises: emulator means arranged to emulate the reduction of the induction of the inductance during the second time period succeeding the first time period depending on the emulated quantity achieved at the end of the first time period and the absolute value of the control voltage during the second time period; and may comprise comparator means arranged to determining the stop time based on the comparison result of the actual emulated quantity to the induction value during the second time period and a predetermined threshold.

With such a synchronous rectifier controller configuration the same advantages can be achieved as with the aforementioned method according to the first aspect of the invention. Such advantages include the abovementioned main advantage that the stop time of the switched rectifier and therewith to a certain extend the rectification time within one cycle is controlled depending on the parameters of this particular cycle.

According to one embodiment of the controller of the present invention in the synchronous rectifier controller at least one of said detecting means and said determining means comprises: a processing unit (CPU) having a program memory and a main memory for executing instructions stored in said program memory to control said switching means; an A/D converter to convert the rectified control voltage into digital value to be provided to the processing unit; means like a comparator arranged to inform the processing unit regarding the prefix of a voltage provided at the secondary winding; and means like a D/A converter arranged to provide a control signal for controlling said switching means depending on a processing result of said processing unit.

In a particular variant of such embodiment of a synchronous rectifier controller the emulator means of the detecting means may comprise an integrator means arranged to integrate the absolute value of the control voltage over time during the first time period; and said emulator means of the determining means may comprise an integrator means arranged to integrate the absolute value of the control voltage over time during the second time period, and subtraction means arranged to subtract the integration result from the final integration result of the emulator means of the detecting means.

Such integrator means may integrate analogue values like an analogue voltage over time. Such integrator means can easily be implemented using for example a RC low pass filter or, more reliable, such low pass filter combined with an operational amplifier (OA) having a capacitive component in its feed back path. However, such integrator means may also integrate binary or digital values like a pulse train or stepped digitized absolute voltages.

To avoid any negative impact caused by residual information like residual magnetization, residual induction, residual voltage, residual counter value, residual electric charge etc. advantageously before starting integration in the first time period of a cycle the integrator means may be reset. That means for example in case of an OA integrator discharging the integrating element and in case of a counter based integrator, setting the counter to an initial value, for example ZERO.

Therefore, in one variant of such embodiment of a synchronous rectifier controller the synchronous rectifier controller may further comprise means for re-setting the integrator means of the detecting means before starting integrating the absolute value of the control voltage in the first time period.

According to a further variant of such embodiment of a synchronous rectifier controller the emulator means of the detecting means may comprise a voltage-frequency converter arranged to convert the absolute value of the control voltage into a pulse train having a frequency depending on the value of the control voltage and a first counter arranged to count up the pulses of the pulse train during the first time period to obtain an upper count value and said emulator means of the determining means may comprise a voltage-frequency converter arranged to convert the absolute value of the control voltage into a pulse train having a frequency depending on the value of the control voltage and a second counter arranged to count down the pulses of the pulse train during the second time period with a start value depending on the upper count value of the first counter.

In a preferred embodiment of such variant of a synchronous rectifier controller, one up/down counter is provided counting the pulse train delivered by one voltage-frequency converter wherein the counting direction of the up/down counter during the first phase, i.e. for example the magnetization phase of a transformer, will be opposite to the counting direction during the second phase, i.e. the demagnetization of a transformer. Further the counting direction may be arbitrary chosen, i.e. incrementing during the magnetization phase and decrementing during the demagnetization phase or decrementing during the magnetization phase and incrementing during the demagnetization phase.

According to yet a further variant of such embodiment of a synchronous rectifier controller it comprises means for re-setting the first counter before starting counting up the pulses of the pulse train in the first time period.

Accordingly, to set a reference value to ensure switching OFF of a synchronous rectifier switch before the end of the demagnetization phase, it is possible, to derive a turn-OFF information when the counter achieves a predetermined count. Alternatively, at the beginning of the magnetization phase, the counter may be initialized by a predetermined count to ensure that there are more counts during the magnetization phase than during the demagnetization phase, i.e. before delivering a turn-OFF signal to the synchronous rectifier switch.

According to yet a further variant of such embodiment of a synchronous rectifier controller it further comprises means for determining a start time within the second time period for switching ON the switching means, wherein the start time is derived from a polarity change of the control voltage.

As already mentioned in the preamble of the description synchronous rectifier and therefore synchronous rectifier controller are often used in switched mode power converters, wherein the synchronous rectifier is comprised in a power converter. Thus according to a further Aspect of the present invention, an synchronous rectifier controller according to the invention may be part of a power converter power converter, which power converter comprises a main switch periodically switched ON and OFF depending on a pulse width modulated control signal from a PWM controller to build up the induction and to reduce the induction, respectively.

According to preferred embodiments of synchronous rectifier controllers according to the present invention, the power converter may be one out of a free running fly-back converter and a forward converter; and the inductor may comprise a transformer having a primary winding and at least one secondary winding.

According to the latter embodiment the control voltage may be derived from the voltage provided at a secondary winding of the transformer. Such secondary winding may be the main secondary winding, which is providing the voltage to be rectified. However, such secondary winding may also be an auxiliary secondary winding, too.

The above-described and other features of the present invention are hereinafter explained in detail with reference to the illustrative examples shown in the accompanying drawings. Those skilled in the art will appreciate that the described embodiments are provided for the purpose of illustration and understanding of the invention and that numerous equivalent embodiments are contemplated herein without departing from the scope of the invention as defined by the appended claims.

### BRIEF DESCRIPTION OF THE DRAWINGS

Further objects and advantages of the present invention will become clear from the following description taken in conjunction with preferred embodiments thereof with reference to the accompanying drawing, in which
- Fig. 1: is a schematic block diagram showing a synchronous rectifier according to a preferred embodiment of the present invention;
- Fig. 2: is a schematic block diagram showing an analog implementation of a synchronous rectifier according to the preferred embodiment shown in Fig. 1;
- Fig. 3: is a schematic block diagram showing an digital implementation of a synchronous rectifier according to the preferred embodiment shown in Fig. 1;
- Fig. 4: is a schematic timing diagram showing voltage signals and the induction/magnetization status in a power converter utilizing a synchronous rectifier according to Fig. 1;
- Fig. 5: is a schematic diagram showing the topology of a fly-back converter comprising a synchronous rectifier, in which the present invention is applicable;
- Fig. 6: is a schematic diagram showing the topology of a single-ended forward converter comprising a synchronous rectifier, in which the present invention is applicable;
- Fig. 7: is a schematic flow diagram of a PWM control flow on a primary side of a power converter according to Fig. 5 and the control flow of the respective synchronous rectifier control depending on events; and
- Fig. 8: is a schematic block diagram showing an implementation of a synchronous rectifier controller, which can be utilized as the synchronous rectifier controller in one of the embodiments shown in Figs. 1, 5 and 6 using a micro-controller.

### DETAILLED DESCRIPTION OF PREFERRED EMBODIMENTS

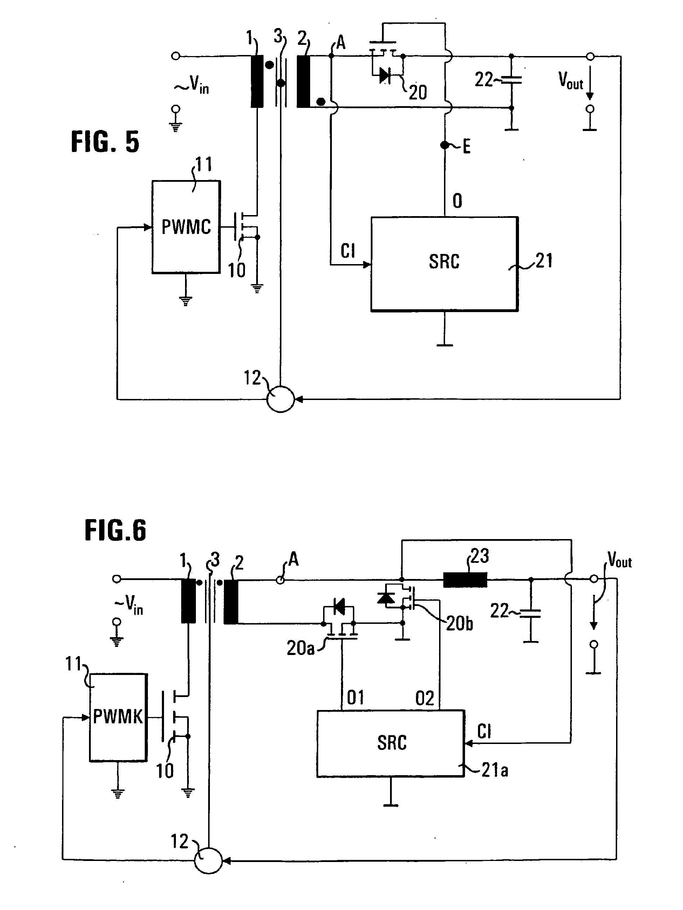

Before explaining the specific features according to the present invention in detail, first referring to Figs. 5 and 6 a general explanation is given regarding different types of switched mode power converters comprising a synchronous rectifier in which the present invention is preferably applicable.

Referring to Fig. 5, a schematic topology diagram of a fly-back power converter comprising a synchronous rectifier is shown. Such fly-back power converter comprises a transformer having a primary winding 1, a core 3 and a secondary winding 2, which divide the power converter into a primary side and a secondary side. On the primary side, one input terminal of the primary winding 1 is supplied by an input voltage Vin and the other terminal of the primary winding 1 is connected to one switched terminal of a main switch 10. The other switched terminal of the main switch 10 is converted to the other terminal of the input voltage Vin, e.g., ground of the primary side. The control input of the main switch 10 is controlled by a pulse width modulation controller (PWMC) 11, which controls the switching status of the main switch depending on an output voltage Vout, outputted by the power converter.

The secondary winding 2 of the transformer is connected to one switched terminal of a switching means 20, the other switched terminal of which is connected to one output terminal of the output voltage Vout of the power converter. This switching means 20 may be any switching means, capable to lead current in one direction when switched ON and comprising free running means to lead current in the opposite direction when switched OFF. Such switching means may be for example a switching field effect transistor with body diode like a MOS-FET, preferably with a fast recovery body diode. Further examples are bi-polar transistors with free running diodes, preferably Schottky-diodes, BI-MOS transistors or any other switching means, which can be controlled to switch ON or OFF and which fulfills the above-mentioned condition. A free-wheeling element is necessary because the respective switching means will be turned OFF slightly before the demagnetization or the reduction of the inductance has been finished. Thus, when turning the switching means OFF the demagnetization current will further flow through such free-wheeling element like a body diode or a free-wheeling diode. A rectification switch shall be turned OFF as much as possible at the end of the demagnetization period because the efficiency of a turned-ON switch is much higher than that of a free-wheeling diode.

In the example of Fig. 5, the output voltage is provided by one terminal of the secondary winding 2 of the transformer, i. e. ground of the secondary side, and the switching means 20, when switched ON, i.e. when in a conductive state. The output voltage Vout is stabilized by a capacitive element, i.e. a capacitor 22 according to Fig. 5, additionally to the current limiting effect of the secondary winding 2 of the fly-back converter.

A synchronous rectifier controller (SRC) 21 is provided having a control input CI, which is supplied with the voltage from the secondary winding 2 at knot A as a control signal. Further the SRC 21 comprises a control output O, which is connected to a control input of the switching means 20, to turn the switching means 20 ON and OFF depending on the status of the voltage at the secondary winding 2.

The output voltage Vout is fed back to the controller (PWMC) 11 of the primary side via a separation element 12 to galvanically separate the secondary side output voltage Vout from the primary side control circuit 11. Such separation element might be any capacitive, inductive or opto-electronical signal converter means.

Now the operation of the fly-back topology circuit as shown in Fig. 5 will be described.

During the ON time of the main switch 10 on the primary side of the fly-back converter, the core 3 of the transformer is charged with energy. The magnetization of the transformer core 3 and the current in the primary winding 1 increase linearly over time until a predetermined upper limit. This upper limit depends on a predetermined output voltage Vout at the output of the power converter depending on load (not shown). When reaching the above-mentioned upper limit of magnetization of the transformer core 3, the main switch 10 is switched OFF by the PWMC 11.

Thereafter the transformer core 3 is demagnetized while the main switch 10 is switched OFF. During this demagnetization period, the magnetization of the core and the current in the secondary winding decrease linearly over time until the magnetization of the core becomes ZERO. The PWM controller 11 from the primary side recognizes the end of the demagnetization of the core and a new cycle of magnetization and demagnetization starts.

The magnetization phase and the demagnetization phase of such cycle are influenced by peripheral electrical circumstances of the fly-back converter. Generally, the higher the voltage at the secondary or the primary winding, the more will the magnetization or the demagnetization be accelerated, respectively. The pulse duty ratio of the PWM controller output and its pulse repetition rate are automatically set depending on the output voltage Vout and, therefore, the fly-back converter is free running.

During the demagnetization phase, the synchronous rectifier switch 20 is switched on to let the current flowing through the secondary winding to an output terminal.

The switch 20 of the synchronous rectifier is switched ON when the main switch 10 on the primary side is switched OFF and vice versa. When the main switch 10 is switched ON, the output voltage of the transformer on the secondary winding 2 (knot A) goes from Vout to -Vin and if the synchronous rectifier switch 20 would not be switched OFF, a short circuit loop would be generated with the output capacitor 22 connected in parallel to a negative voltage for discharging this capacitor 22 rapidly. This would cause a serious ripple in the regulated output voltage. Therefore, in case of a fly-back power converter according to Fig. 5, it is necessary to ensure that the synchronous rectifier switch 20 will be switched OFF before the main switch 10 will be switched ON.

Because of parasitic effects, mainly caused by the transformer 1,2,3, a change of the voltage as knot A will have some delay compared with the switching operation of the main switch 10 controlled by the PWMC 11. Therefore, the control input CI of the SRC 21 may be used to switch the switching means 20 of the synchronous rectifier ON but cannot be used to switch the switching means 20 OFF in time.

Turning now to Fig. 6, a schematical topology diagram of a single-ended forward power converter is shown comprising a transformer with a primary winding 1, a core 3 and a secondary winding 2. The topology of the circuit with respect to the primary winding is the same as the one of Fig. 5 and therefore the description of it will be omitted here. However, a main difference between the circuit shown in Fig. 5 and the one shown in Fig. 6 is that in the latter one the synchronous rectifier has to be turned ON when the main switch of the forward converter is turned ON.

On the secondary side of the power converter according to Fig. 6, because the current limiting effect of the secondary winding 2, effective in the case of a fly-back converter according to Fig. 5 is not available, some additional measures are necessary to ensure sufficient free wheeling current and further to ensure a sufficiently smooth output voltage Vout. To smooth the output voltage, additionally to the output capacitor 22, a choking inductor 23 is provided in series between the secondary winding and one output terminal of the output voltage Vout. To ensure the necessary free wheeling in case the forward rectifier switch 20a between one output terminal (ground) and one terminal of the secondary winding 2 is switched OFF, a further switching means 20b is provided between this respective terminal of the output voltage Vout (ground) and the other terminal of the secondary winding (knot A in case of Fig. 6). The switching means 20a, 20b of the single-ended forward converter according to Fig. 6 may be of the same type as mentioned above in the case of the fly-back converter according to Fig. 5.

The synchronous rectifier controller SRC 21a according to Fig. 6 provides a first output O1 (knot E1) to be supplied to the control terminal of the forward rectifier switch 20a and a second output 02 (knot E2) to be supplied to the control terminal of the free wheeling switch 20b. In general, the output signals O1 and 02 are complementary to each other. Slight deviations between the absolute values of both these output signals O1 and 02 over time depend on parameters of the power converter and parameters of the utilized switching means.

As mentioned with reference to the topology shown in Fig. 5, the output voltage Vout is fed back to the PWMC 11 on the primary side via a separator element 12.

Now the operation of the synchronous rectifier in the single-ended forward converter will be described.

The SRC 21a achieving control information from the knot A of the secondary winding 2 generates the output signals O1 and 02 for the forward rectifier switch 20a and for the free wheeling switch 20b. Again, voltage changes at knot A are slightly delayed with respect to the control signal of the PWMC 11 controlling the switching status of the main switch 10. In case, the voltage knot A, which is inputted in the control input CI of the SRC 21a, would be used as is to control the forward rectifier switch 20a and the free wheeling switch 20b, a delayed turn OFF of these synchronous rectifier switches 20a and/or 20b would cause a shoot-through in the loop on the secondary side, built by the secondary winding 2 and the forward rectifier switch 20a, as well as the free wheeling switch 20b each time the main switch 10 will be switched ON and will be switched OFF.

Particularly, when the main switch 10 is switched ON, the voltage on knot A goes positive. This voltage forward biases the body diode of the forward rectifier switch 20a and caused by the delay in turning OFF the free wheeling switch 20b, an unlimited current flows in the short circuit loop through the free wheeling switch 20b and the free wheeling element (i.e. body diode in the case of the MOS transistor) of the forward rectifier switch 20a as well as the secondary winding 2 of the transformer. Conversely, when the main switch 4 is switched OFF, the voltage at knot A goes negative. If the free wheeling switch 20b is, due to the delay of the signal at knot A, not yet switched OFF, this negative voltage forward biases the free wheeling element of the forward rectifier switch 20a, i.e. the body diode in case of a MOSFET, and a short circuit loop is formed by this free wheeling element of the forward rectifier switch 20a and the not yet switched OFF free wheeling switch 20b and the secondary winding 2 of the transformer. Such a problematic situation will be avoided by turning OFF the rectifier switch 20a with a sufficient lead time before the transient of the main switch. Further, with respect to the turn-OFF timing of the free wheeling switch 20b, since such free wheeling switch 20b is turned on during the demagnetization periode of the transformer, a method according to the invention may be utilized to turn OFF the free wheeling switch 20b.

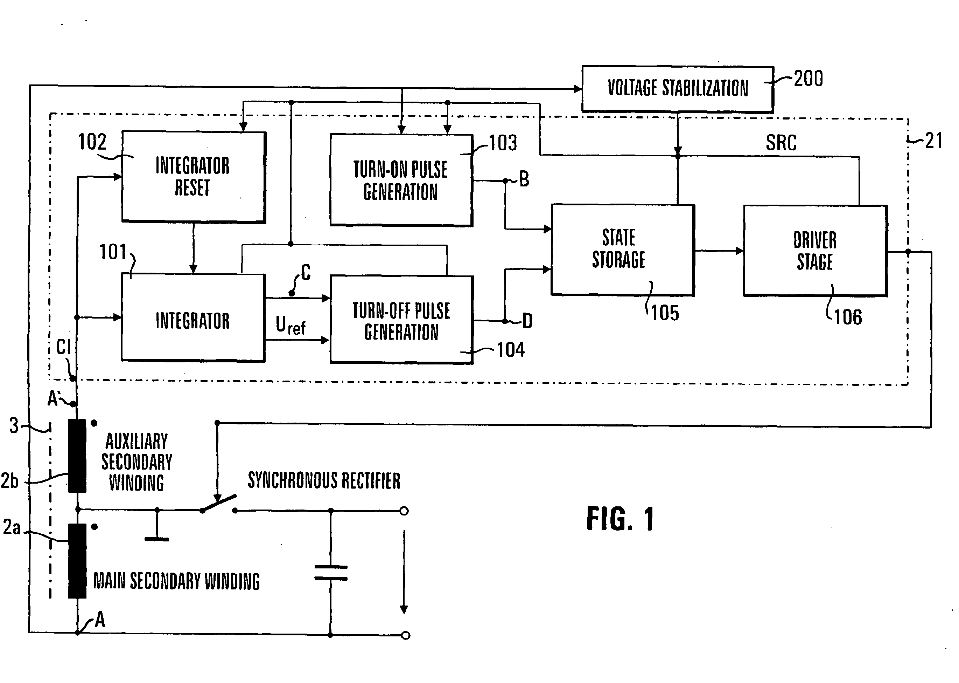

Turning now to Fig. 1, a schematic block diagram showing a synchronous rectifier according to a preferred embodiment of the present invention is shown. In particular, the secondary side of a free running fly-back power converter is shown, wherein the secondary winding is divided in the main secondary winding 2a and a auxiliary secondary winding 2b. One terminal of the main secondary winding 2a is connected to one switched terminal of the synchronous rectifier switching means 20, the other terminal of which is connected to one terminal of an output capacitor 22 and one output terminal of the power converter. The other terminal of the main secondary winding 2a is connected to a knot A, which in turn is connected to the voltage stabilization circuit 200, the other terminal of the output capacitor 22 and an output terminal to provide the output voltage Vout.

The auxiliary secondary winding 2b shares one terminal with the main secondary winding 2a and the other terminal of the auxiliary secondary winding 2b is connected to a knot A'. The absolute value of the voltage at this knot A' is proportional to the absolute value of the voltage at the knot A of the main secondary winding 2a. This knot A' is connected with the control input CI of the SRC 21 to supply a voltage at the knot A' to an input of an integrator unit 101 and to an input of an integrator reset unit 102. The integrator reset unit 102 provides a reset signal at a knot F to a reset input of the integrator unit 101. The integrator unit 101 integrates the input provided from the control input CI over a predetermined time period and provides an integration result at an output to a knot C. The signal at the knot C is inputted to an turn-OFF pulse generation unit 104 for generation a turn-OFF pulse depending on the integrated value provided at knot C and a reference value Uref.

The turn-OFF pulse generation unit 104 provides a binary output signal (turn-off pulse or no turn-off pulse) to a knot D, which in turn is connected to one input of a state storage unit 105.

The turn-ON pulse generation unit 103, which in the embodiment shown in the schematic block diagram shown is Fig. 1 is connected to the knot A of the main secondary winding 2a to receive the voltage at this knot A as an input signal to derive turn-ON information out of it, provides a turn-ON pulse as an output to a knot B. This knot B is connected to a further input of the above-mentioned state storage unit 105. The sate storage unit 105 provides at its output a turn-ON signal after receipt of a turn-ON pulse from the turn-ON pulse generation unit 103 until receipt of a turn-OFF pulse from the turn-OFF pulse generation unit 104. This output signal of the state storage unit 105 is fed to an input of a driver stage 106.

The output of the driver stage 106 forms the output O of the SRC 21 (knot E), providing the control signal to switch the synchronous rectifier switch 20 ON or OFF, respectively. The function of the driver stage 106 is in this case to speed up a transient of the switching state of the synchronous rectifier switch 20 depending on the output signal of the state storage unit 105.

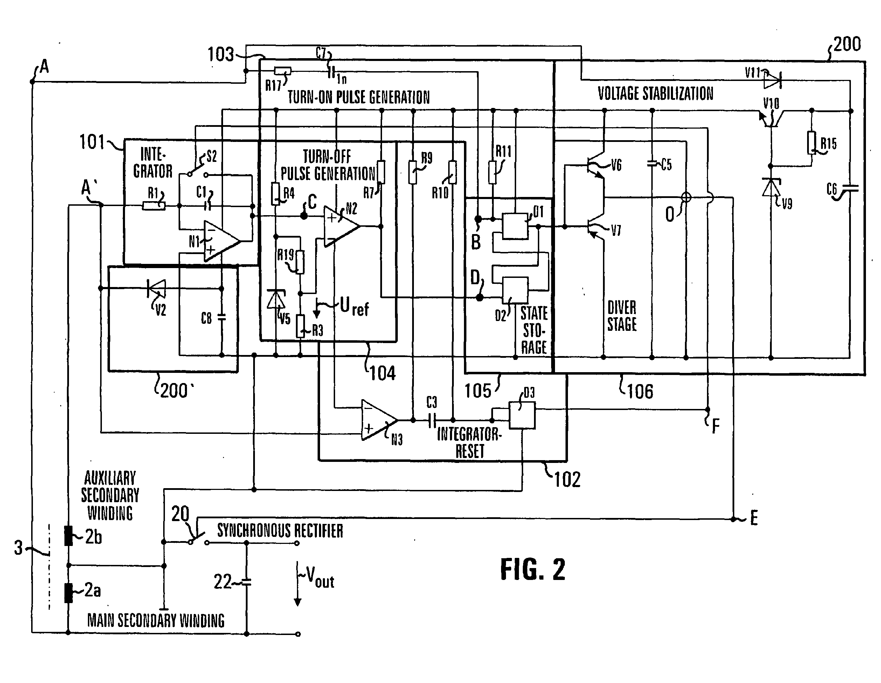

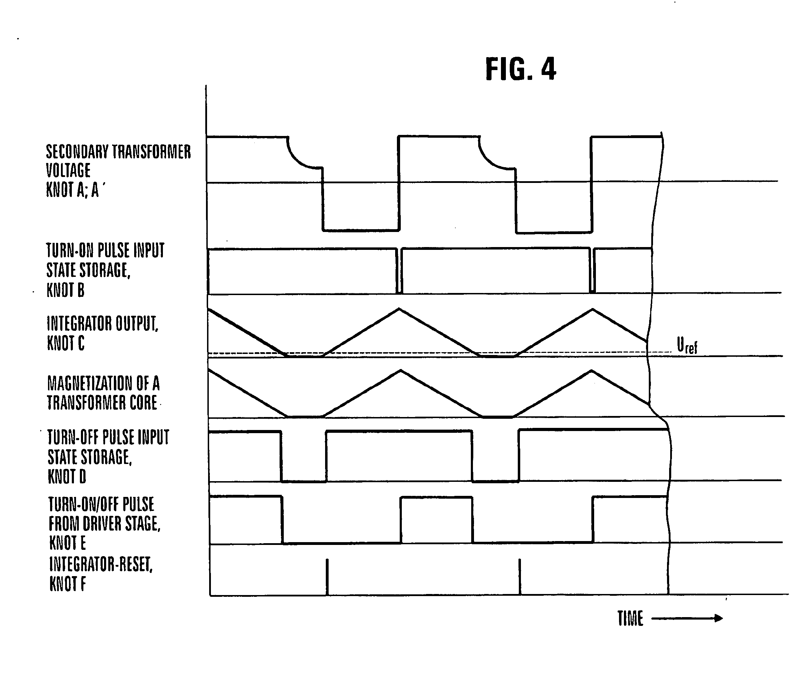

Now the function of the synchronous rectifier and in particular the synchronous rectifier controller 21 will be described taking reference to the signal diagram of Fig. 4, which shows the voltage at the secondary winding of the transformer, in particular at knot A', the voltage provided at the output of the turn-ON pulse generation unit, in particular at knot B, with respect to the implementation according to Figs. 1 and 2, the voltage at the output of the integrator unit 101, i.e. at knot C, the magnetization status of the core 3 of the transformer, the turn-OFF pulse status provided by the turn-OFF pulse generation unit 104, i.e. at knot D, the switching pulse for switching OFF/ON of the synchronous rectifier switch 20, which pulse is provided by the driver stage 106 at the output O and the knot E, and the integrator reset pulse at knot F, from top to bottom in the diagram of Fig. 4, each drafted over time. Together with the integrator output voltage at knot C, in broken lines, the reference voltage Uref is also provided.

The present invention is primarily directed to the controlling to switch OFF a synchronous rectifier switching means. Therefore, only one example is given, how to switch ON the synchronous rectifier switching means depending on'the magnetization status of a transformer or the switching status of a main switch of a power converter. With a polarity change of the transformer output voltage at knot A, the turn-ON pulse generation unit 103 provides a turn-ON pulse at knot B. Although the turn-ON pulse at knot B of the synchronous rectifiers shown in Figs. 1, 2 and 3 is provided depending on a rising (or falling) edge or a polarity change of the voltage at the secondary winding, caused by the transient of the main switch from ON to OFF, the present invention is not limited to this particular solution. Moreover, each conceivable implementation, to derive a turn-ON information depending on a state transient of a main switch or depending on a transient from building up the induction in the inductance and reducing the induction in this inductance maybe used without departure from the scope of the present invention.

Now the generation of the turn-OFF pulse according to the preferred embodiment of the present invention will be described for one magnetization/demagnetisation cycle of the transformer.

The voltage integrated over time (voltage-time-area) during the magnetization phase of the transformer complies with the voltage integrated over time during the demagnetization phase of the transformer. Therefore according to the preferred embodiment of the invention shown in Fig. 1, the integrator unit 101 integrates a control voltage, provided at knot A' by the auxiliary secondary winding 2b over time during the magnetization phase of the transformer, i.e. while the main switch (not shown in Figs. 1, 2 and 3) of a power converter is switched ON and the synchronous rectifier switch 20 is switched OFF. To ensure, that the integrator unit 101 will start integration in each cycle independent from any history, the integrator reset unit 102 resets the integrator 101 with the falling edge (or the rising edge) of the voltage at knot A', which is a control voltage, the absolute value of which is proportional to the voltage supplied by the transformer on a secondary winding.

After this first time period of magnetization of the transformer is finished, with the beginning of the second time period of demagnetization of the transformer, the prefix of the voltage provided at the secondary winding of the transformer and, in the case of Fig. also the prefix of the control voltage, provided at knot A' of the auxiliary secondary winding 2b is inverted. Caused by this, further integration of the voltage provided at knot A' by the integrator unit 101 will reduce the integration result, which in the case of Figs. 1 and 2 is provided at knot C and the integration result of the integrator unit 101 will become ZERO at the end of this second time period, i.e. the demagnetization phase of this cycle. The output of the integrator unit 101 is supplied to an input of the turn-OFF pulse generation unit 104 and this turn-OFF pulse generation unit compares the result of the integrator unit 101 with a reference value Uref. If the integrator unit output becomes equal or less than the reference value Uref, the turn-OFF pulse generation unit 104 provides a turn-OFF pulse at knot D. This reference value Uref cannot be less than ZERO, but will preferably be higher than ZERO to ensure switching OFF the synchronous rectifier switch 20 in time before a main switch (not shown in Figs. 1, 2 and 3) will be switched ON. The particular value to be chosen as a reference value Uref depends on power converter parameters like the allowable short time change of the input voltage Vin and of the load (not shown), i.e. of the load current. The reference value Uref further depends'on the allowable deviation of the output voltage Vout, the kind of synchronous rectifier switch, the kind of main switch, etc.

By adjusting such variable reference value Uref, the synchronous rectifier switch 20 may be switched OFF at each useful time within the demagnetization phase of the transformer.

Since the stop time is derived based on a control voltage, the absolute value of which is proportional to the voltage, supplied by the main secondary winding 2a to be rectified and because the synchronous rectifier controller thus emulates the status of the magnetization of the transformer core 3 to derive a stop time to switch OFF the synchronous rectifier switch 20, wherein each change of an input voltage Vin on the primary side is taken in account in this emulation and also each change of the load, i.e. the change in the output voltage Vout and therefore the control voltage at the knot A' is taken in account in this emulation, the stop time of the synchronous rectifier switch depends on the actual status of magnetization. Therefore protection time between turning OFF the synchronous rectifier switch 20 and turning ON a main switch (not shown in Figs. 1, 2 and 3) of the power converter can be significantly shorter compared with synchronous rectifiers according to the prior art. Such protection time can be set by the above-mentioned reference value Uref of the turn-OFF pulse generation unit 104.

To ensure that the synchronous rectifier switch 20 will stay switched OFF until a turn-ON pulse will be generated, the above-mentioned storage unit 105 provides a status signal (OFF or ON) for the synchronous rectifier switch 20, which is in the status ON beginning with the receipt of turn-ON pulse at knot B from the turn-ON pulse generation unit 103 until receipt of a turn-OFF pulse at the knot D provided from the turn-OFF pulse generation unit 104. To speed up the status transients of the synchronous rectifier switch 20, the output signal of the state storage unit 105 is boosted by a driver stage 106.

Turning now to Fig. 2, an analog implementation of the synchronous rectifier controller shown in Fig. 1 is provided as a preferred embodiment of the present invention. Fig. 2 is a schematic diagram and therefore circuit elements, which are even necessary for a proper implementation of the circuit but not necessary for the understanding of the invention, are omitted in Fig. 2. Such elements are for example current limiter resistors and other resistors and capacitors necessary for stabilization purposes. However, a person skilled in the art will enjoin such missing elements based on his basic knowledge.

Since the general structure of the circuit shown in Fig. 2 is the same as the one of the circuit shown in Fig. 1, the description of the general structure will be omitted here. To avoid unnecessary repetition, only the details of the units 101, 102, 103, 104, 105, 106 and 200 will be described.

The integrator unit 101 according to the implementation of Fig. 2 comprises an first operational amplifier N1, supplied with a positive voltage by the voltage stabilization unit 200 and supplied with a negative voltage by a voltage supply unit 200'.

The non-inverting input + of the first operational amplifier N1 is connected with a basic potential, i.e. ground of the voltage stabilization unit 200. The inverting input of the first operational amplifier N1 is connected via a resistor R1 to the knot A' and via a feed-back capacitor C1 and in parallel thereto via a reset switch S2 to the output of the first operational amplifier N1. The resistance value of the resistor R1 and the capacity value of the capacitor C1 define the time constant of the integrator. The reset switch S2 preferably is a field effect transistor or a bi-polar transistor.

The output of the operational amplifier N1 is connected with knot C to provide the output value of the integrator unit 101.

During the magnetization phase of the core 3 of the transformer, the relationship of the primary voltage Vin (not shown in Figs. 1, 2 and 3) and the inductance of the primary winding of the transformer (also not shown in Figs. 1, 2 and 3) is integrated over time. The current in the primary winding increases linearly when voltage is applied to the primary winding. At the end of the magnetization phase, the current in the primary winding achieves its maximum value and decreases thereafter fast to ZERO. At the same time, a current in the secondary winding 2a jumps up to its maximum value in accordance with the maximum magnetization of the core 3 and thereafter starts to decrease. In accordance with the demagnetization, the current in the secondary winding 2a decreases until it becomes ZERO.

In the implementation according to the preferred embodiment of the invention as shown in Fig. 2, this process is emulated with the aforementioned operational amplifier integrator unit. During the magnetization phase of the core 3, the voltage at the integrator output C increases and with the start of the demagnetization phase, this voltage starts to decrease. If the voltage at the integrator output C gets ZERO (0V) the end of the demagnetization phase is achieved. Since the control voltage, which is integrated by the integrator unit 101 according to Fig. 2 is proportional to the voltage supplied by the transformer, the emulation result, i.e. the output of the integrator unit depends on the actual parameters of the power converter in the current cycle of magnetization and demagnetization of the transformer core 3. Therefore, amendments in such parameters during this particular cycle, which are influencing the magnetization status of the transformer core, influence in the same way the status of the output of the integrator unit 101.

On the secondary side of the power supply, a lot of minor disturbances appear. A free running integrator unit 101 would integrate such disturbances over time, leading to inaccurate switch OFF timing. To avoid such errors, as mentioned above, the integrator unit 101 according to the implementation shown in Fig. 2 is reset by an integrator reset unit 102 depending on the status of the voltage of knot A'. For that purpose, as mentioned above, the integrator 101 has a reset switch S2 to short-circuit the integration capacitor C1, i.e. to put the integrator output to ZERO. According to the implementation of the preferred embodiment of the synchronous rectifier controller, an integrator reset unit 102 comprising a comparator N3, one input of which is connected to knot A' and the other input of which is connected to a basic potential, i.e. ground of the voltage stabilization unit 200. The comparator N3 compares the voltage at knot A', i.e. the control voltage with ZERO voltage. Because of the winding sense of the auxiliary secondary winding 2b, providing the voltage at knot A', each time, the value of the voltage at the knot A' becomes ZERO, the output of the comparator N3 becomes high potential. To set the pulse duration of an output pulse of the integrator reset unit, the output of the comparator N3 is connected to one terminal of a first pulse duration setting resistor R9 and to a terminal of a pulse time setting capacitor C3. The other terminal of the first pulse duration setting resistor R9 is connected to supply voltage of the voltage stabilization unit 200. The other terminal of the pulse duration setting capacitor C3 is connected with one terminal of a second pulse duration setting resistor R10 and to both inputs of a NAND gate D3. The other terminal of the second pulse duration setting resistor R10 is connected to the supply voltage of the voltage stabilization unit 200. The time constant defined by the resistance values of both pulse duration setting resistors R9 and R10 and the capacity of the pulse duration setting capacitor C3 define the pulse duration of the integrator signal.

The NAND gate D3 is utilized to form the pulse shape and the output of this NAND gate D3 provides the output signal of the integrator reset unit 102 to the knot F.

The turn-ON pulse generation unit 103 according to Fig. 2 is implemented as a different sheathing network consisting of a series connection of an input resistor R17 and a differentiation capacitor C7 between knot A, i.e. the input of the turn-ON pulse generation unit 103 and knot B, i.e. the output of the turn-ON pulse generation unit. Additionally, a pull-up resistor R11 is connected between knot B and the supply voltage supplied by the voltage stabilization unit 200.

This turn-ON pulse generation unit 103 generates a turn-ON pulse out of the differentiating edge of the secondary voltage at knot A (differentiated by the series connected resistor R17 and capacitor C7) at the beginning of the demagnetization phase. This turn-ON pulse is provided via knot B to one input of the state storage unit 105. In the implementation of the preferred embodiment of the synchronous rectifier controller according to Fig. 2, this state storage unit 105 consists of two status memories, i.e. NAND gates D1 and D2, wherein one input of each of these NAND gates D1 and D2 is connected to the output of the other NAND gate D2, D1 respectively. Thus knot B is connected with one input of NAND gate D1, which together with the NAND gate D2 implements a flip-flop function. Accordingly one input of the other NAND gate D2 is connected with knot D, which in turn is provided with the turn-OFF pulse generation unit output signal.

The turn-OFF pulse generation unit 104 consists of a reference voltage circuit and a comparator N2 comparing the signal on knot C with a reference value Uref. In particular the circuit, which provides the reference voltage Uref, consists of a Zener Diode V5, the cathode of which is connected to ground potential of the voltage stabilization unit 200 and the cathode of which is connected via a supply voltage resistor R4 to the supply voltage of the voltage stabilization unit 200 and via a series connection of two voltage divider resistor R19 and R3 to ground potential. The reference voltage Uref is provided at the connection point between the two series connected voltage divider resistors R19 and R3. This reference voltage Uref is supplied to the inverting input of the above-mentioned comparator N2 of the turn-OFF generation unit 104. The non-inverting input of this comparator N2 is connected to knot C and the output of the comparator N2 is connected to knot D, i.e. to one input of the state storage unit 105 and in particular to the control input of the NAND gate D2. The output of the comparator N2 of the turn-OFF generation unit 104 is further connected via an pull-up resistor R7 to the supply voltage of the voltage stabilization unit 200.

With such circuitry, the turn-ON pulse generated from the differentiated edge of the secondary voltage of the transformer at the beginning of the demagnetization phase will be stored in the state storage D1, D2 unit and the turn-OFF pulse, generated by the comparator N2 will switch the logical state of the state storage 105, in particular of the NAND gate D1 from high to low, i.e. from ONE to ZERO. The turn-OFF pulse generation unit, i.e. the comparator N2 changes its output status exactly when the integrator voltage provided at knot C accomplishes the value of the reference voltage Uref during the de-integration phase, i.e. during the demagnetization phase of the transformer. With a reference voltage Uref higher than ZERO, switching OFF of the synchronous rectifier switch 20 can be assured before the end of the demagnetization period of the transformer core 3.

To speed up the transient of the synchronous rectifier switch transistor 20 from conducting state to blocking state and vice versa, the driver stage 106 is provided, which in the case of the implementation shown in Fig. 2 comprises two complementary transistors V6 and V7, each of which is in common-emitter connection and the connected emitters provide the output of the driver stage, i.e. are connected to knot E. The base connection of each of these two common-emitter connected transistors V6 and V7 are connected to the input of the driver stage and are provided with the output of the state storage unit 105. The collector of one transistor (a NPN bi-polar transistor in the embodiment of Fig. 2) is connected to the positive supply voltage of the voltage stabilization unit 200 and the collector of the other transistor V7 (in the implementation of the embodiment shown in Fig. 2 a PNP transistor) is connected to the negative power supply of the voltage stabilization unit 200, i.e. ground. With such circuitry, in case the voltage supplied at the base connection of the transistors V6 and V7 is above a predetermined threshold, V7 is switched OFF and at the same time V6 is switched ON to provide the positive supply voltage (minus the collector emitter voltage of transistor V6) to the output O (knot E). On the contrary, if the voltage supply to the base of each of transistors V6 and V7 falls under the threshold, transistor V6 will be switched OFF and transistor V7 will be switched ON to provide count potential (plus the collector emitter voltage of transistor V7) to the output O.

Because of the current gain of transistors V6 and V7, a small current at the base connections of these transistors, provided by the base storage unit 105 will be immediately converted in a higher output current at the output O to drive the switching operation of the synchronous rectifier switch 20 with high speed. To ensure, that such current will be immediately available at the output O, a support capacitor C5 is provided in parallel to the pairs of transistors V6 and V7, i.e. one of the terminals of the support capacitor C5 is connected to the collector of the transistor V6 and the other terminal of the support capacitor C5 is connected to the collector of the transistor V7. The capacity of this capacitor C5 should be chosen to ensure that the charge necessary to provide an output current at the output O to quickly switch the synchronous rectifier switch 20 will be available from this capacitor.

Finally, the voltage stabilization unit 200, 200' will be described, which is not part of the SRC but never the less necessary to operate the synchronous rectifier.

In the example shown in Fig. 2, the voltage stabilization unit 200 is divided into one main voltage stabilization unit for providing supply voltage with a positive output terminal and a ground terminal. Further, especially to supply the operational amplifier N1 of the integrator unit 101 with positive and negative supply voltage, a non-stabilized negative supply voltage unit 200' is provided.

The negative supply voltage of the operational amplifier N1 is simply a rectifier diode V2, the anode of which is connected to the negative supply input of the operational amplifier N1 and the cathode of which is connected to knot A', i.e. the not-grounded terminal of the auxiliary secondary winding 2b. Because of the sense of winding of the auxiliary secondary winding 2b compared to the sense of winding of the main secondary winding 2a (which is providing the input voltage for the voltage stabilization unit 200), a voltage negative with respect to ground will be supplied to the negative supply terminal of the operational amplifier N1. Depending on the allowable range of an input voltage on the primary side (not shown in Fig. 2) and depending on the winding ratio between a primary winding (not shown in Fig. 2) and the auxiliary secondary winding 2b, a stabilization of this negative voltage supply may not be necessary. However, if such stabilization is necessary, a circuit similar to the one used in the voltage stabilization unit 200 may be used. To reduce the ripple at the negative supply voltage of the operational amplifier N1, a smoothing capacitor C8 is provided between this negative supply terminal of the operational amplifier N1 and ground.

As mentioned above, the positive voltage stabilization unit is supplied with input voltage from the knot A, i.e. the not-grounded terminal of the main secondary winding 2a. In the voltage stabilization unit 200, a rectifier diode V11 is provided, the anode of which is connected with the knot A and the cathode of which is providing a rectified non-stabilized voltage, the ripple of which is smoothed by a capacitor C6 provided between the cathode of the rectifier diode V11 and ground. A regulator transistor V10, in the example shown in Fig. 2 a NPN bi-polar transistor, is provided to supply the stabilized voltage at its emitter. To this purpose the collector of the regulator transistor V10 is connected with the cathode of the rectifier diode V11 and via a resistor R15 to the base connection of the transistor V10. Further the base connection of the transistor V10 is connected to the cathode of a Zener diode V9, the anode of which is connected to ground. The negative break through voltage of the Zener diode V9 provides a stable reference voltage at the base connection of the regulator transistor V10. The resistance of the resistor R15 is chosen to set both the operating points of the Zener diode V9 and together with the reference voltage provided at the cathode of the Zener diode V9, to set the operating point of the transistor V10.

The implementation of the preferred embodiment according to the present invention as shown in Fig. 2 is provided to show the best mode to conduct the present invention, i.e. to realize a synchronous rectifier controller. Further only as an example, the topology of the synchronous rectifier shown in Fig. 2 is the one, which may be used in a fly-back converter. However, the invention is not restricted to the usage of such synchronous rectifier controller in a fly-back converter and a person skilled in the art will appreciate that the synchronous rectifier controller shown in Fig. 2 may be adapted to control synchronous rectifier switches in any type of the power converters, in which current to be switched OFF depends on a magnetization status of a transformer or any induction status of a inductance. For example, in case of a forward converter, the switch controllable according to the present invention is a free-wheeling switch of the synchronous rectifier.

Further, although a specific circuit for implementing the integrator unit 101 is shown in Fig. 2, a person skilled in the art will appreciate that any conceivable circuit to implement an integrator unit may be used instead.

The same applies to a circuit for providing a reference voltage in the turn-OFF pulse generation unit 401.

Further, although in the example of the best mode to carry out the invention shown in Fig. 2, the state storage unit 105 is implemented, using two NAND gates interconnected with each other to implement a flip-flop function, a skilled person will appreciate that there are many possibilities to implement such state storage unit 105 without deviation from the present invention.

The same applies to the specific implementation of the turn-ON pulse generation, the specific implementation of the integrator reset unit 102, the specific implementation of the driver stage 106 and the implementation of the voltage stabilization unit 200, 200'.

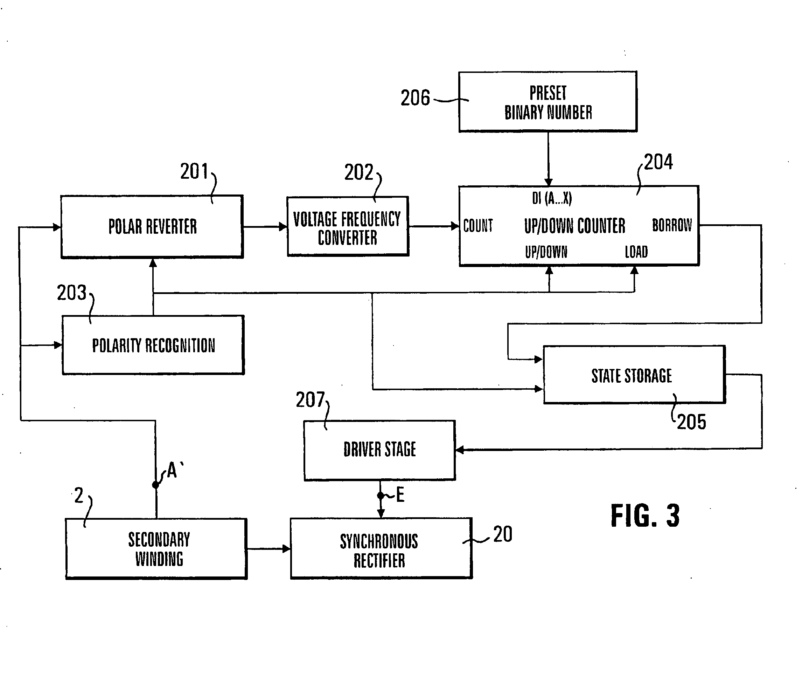

Turning now to Fig. 3, a schematic block diagram is given providing the basic structure of an alternative implementation of the preferred embodiment of the present invention as shown in Fig. 1. Particularly, a secondary winding 2 is provided having an output to a knot A, which is connected to a synchronous rectifier 20 and having an output A' to provide a signal to a polar reverter block 201 as well as a polarity recognition block 203.

The polar reverter block 201 provides an output signal to a voltage frequency converter block 202, which provides a frequency depending on the input voltage to a count input of a up/down counter 204. the up/down counter 204 is provided with a count direction control input "up/down", a reset input "load", a carry output "borrow", which provides a carry information at the counter status "0" and an initial value input "DI (A...X)" for inputting an initial value provided by a preset binary number block 206. The carry output "borrow" of the up/down counter 204 provides information to one input of a state storage block 205. The polarity recognition block 203 provides information to the polar reverter block 201 to set the status of the polar reverter block 201 in an inverting or not-inverting status depending on the polarity of the input voltage of the polar reverter block 201. Particularly, if the input voltage of the polar reverter block 201 is negative, the polar reverter is put into its inverting state by the polar recognition block output signal. On the contrary, if the input voltage of the polar reverter block 201 is positive, the status of the polar reverter block 201 is set not-inverting. The functionality of this polar reverter block 201 is, to rectify the voltage provided at knot A' because the voltage-frequency converter 202 usually operates only with positive input voltage.

The polarity recognition block 203 provides depending on the transient of the status of a in Fig. 3 not shown main switch of a power converter from ON to OFF a turn ON information to the state storage block 205. On receipt of this turn-ON information from the polarity recognition block 203, the status stage block 205 provides a turn-ON signal via a driver stage 207 to a synchronous rectifier block 20.

Further the polarity recognition block 203 controls the counting direction of the up/down counter 204 by providing a control signal to the counting direction input "up/down" of this up/down counter 204. Particularly, during the magnetization phase of a (in Fig. 3 not shown) transformer core, the counting direction of the up/down counter will be UP and during the demagnetization phase of such transformer core, which starts with a polarity change of the voltage at knot A', the counting direction of the up/down counter 204 will be DOWN.

Based on a polarity change of the voltage provided at knot A' at the transient from the demagnetization phase to the magnetization phase of the next cycle of the above-mentioned (in Fig. 3 not shown) transformer core, the polarity recognition block 203 controls the reset control input "load" of the up/down counter to initiate down loading of the preset binary number from the preset binary number block 204 to ensure a predefined count of the up/down counter at the beginning of the magnetization phase.

Now the relationship and functionality between the magnetization of a transformer and the status of the up/down counter will be described.

The voltage frequency converter 202 provides a pulse train at its output depending on the voltage at its input, i.e. the absolute value of the voltage at the knot A'. The frequency of this pulse train is proportional to the absolute value of the voltage at the input of the voltage frequency converter 202.

As mentioned above, the counting direction of the up/down counter 204 will be set to UP at the beginning of the magnetization phase of a transformer core. At the same time, a preset binary number will be loaded into the counter as an initial count. Now the up/down counter 204 counts up the pulses, delivered by the voltage frequency converter 202 during the magnetization phase and thus integrates the voltage at knot A' over time during this magnetization phase up to a maximum count at the end of the magnetization phase. With the polarity change of the voltage at knot A', i.e. with the beginning of the demagnetization phase of a transformer core, the counting direction of the up/down counter 204 will be changed to DOWN controlled by the polarity recognition block 202. Thus the up/down counter 204 starts counting DOWN beginning with the maximum count value achieved during the magnetization phase of the same cycle.

Again, also during the demagnetization phase, the absolute value of the voltage at knot A', i.e. the input voltage of the voltage frequency converter 202 is converted to a pulse train, the frequency of which is proportional to the value of the voltage at the input of this voltage frequency converter 202. Thus the up/down counter counting the pulses of this pulse train is integrating the voltage at knot A' over time during the demagnetization of a transformer. Since the counting direction has been changed, the integrated value is subtracted from the integrated value achieved during the magnetization phase depending on the voltage at knot A'. If the count value becomes ZERO, the up/down counter 204 delivers at its carry output "borrow" a turn-OFF information to the state storage block 205, which on receipt delivers a turn-OFF signal via the driver stage 207 to the synchronous rectifier 20 for switching the synchronous rectifier OFF. To avoid the above-mentioned shoot-through at the end of the demagnetization phase, i.e. to avoid flow of energy from the secondary side to the primary side, the ON-time of the synchronous rectifier switch 20 shall be chosen shorter than the demagnetization time of the transformer. For that purpose, with the beginning of the magnetization period of the transformer, the counter 204 is preset by a preset binary number so that it has to count a few increments until ZERO will be reached. This can easily be implemented by setting the preset binary number a few increments under the maximum possible count of the counter. In this case, starting at the beginning of the magnetization phase of a transformer, the counter starts counting UP to the maximum count value of the counter and after that starts counting at ZERO. In this situation, while counting up a carry signal at the output "borrow" of the up/down counter will not influence the state storage block 205, as it is already storing the turn of status.

By such implementation, the absolute integrated value during the magnetization phase will be higher than the integrated value during the demagnetization phase, which means, that the synchronous rectifier will be switched OFF before the absolute end of the demagnetization of the transformer.

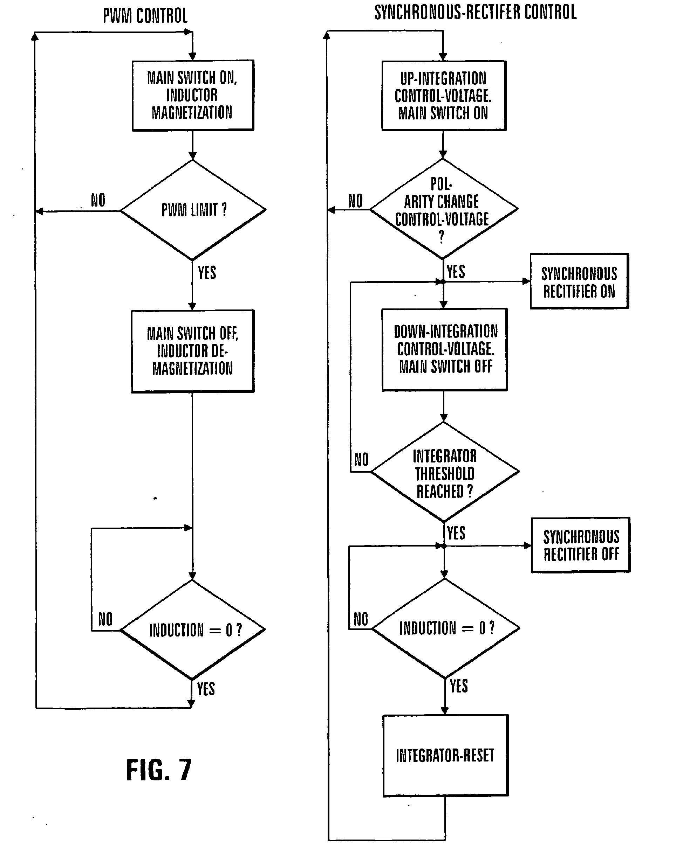

Turning now to Fig. 7 showing in parallel a PWM control flow on a primary side of a power converter according to Fig. 5 and the control flow of the synchronous rectifier control on the secondary side of such power converter depending on events. First, when a main switch on the primary side of a power converter is switched ON, the inductor, i.e. the transformer starts magnetization in a step S1. At the same time the synchronous rectifier control starts up-integration of a control voltage provided at knot A depending on the ON status of the main switch in a step S1'. At the next step, on the primary side in a step S2 it is decided whether the pulse width modulation control has achieved its control limit. If such limit is not achieved, the control is looping back to step S1. In parallel, the synchronous rectifier control checks during a step S2' the occurrence of a polarity change of control voltage at knot A. In case the polarity of the control voltage does not change, the flow loops back to step S1'. If the comparison result of Step S2 on the primary side is YES, i.e. the pulse width modulation limit has been reached, in a step S3 the main switch is controlled to switch OFF and the demagnetization of the inductor, i.e. transformer starts. Depending on switching OFF the main switch, the comparison result in step S2' in the synchronous rectifier control will also be YES, i.e. a polarity change of the control voltage occurred. As a result, the control starts in step S3' the down integration of the control voltage depending on the OFF status of the main switch on the primary side. At the same time, the synchronous rectifier control controls the synchronous rectifier switch to switch ON in a step S32'. Following starting of the down integration of the control voltage as step S3', in a step S31', the synchronous rectifier control checks whether the integrator threshold has been reached or not. If this integrator threshold has not been reached, the control loops back to the beginning of step S3' and the synchronous rectifier will be kept in its ON state. If the comparison result at step S31' is YES, in a step S41', the synchronous rectifier is controlled to switch OFF. Further, in a step S4' it is checked, whether or not the induction, i.e. the magnetization status of a transformer is ZERO. In parallel on the primary side, the PWM control also checks in a step S4, whether the induction is ZERO of not. If the induction is not ZERO, the PWM control loops back to the beginning of step S4 and similarly the synchronous rectifier control loops back to the beginning of step S4', keeping the synchronous rectifier in an OFF status. If on the primary side the PWM control determines at step S4, that the induction is ZERO, the PWM control loops back to step S1, switching the main switch ON and starting magnetization of the inductor. On the,secondary side, if the synchronous rectifier control determines in step S4' that the induction is ZERO, the control goes to step S5' to reset the integrator and then the control loops back to step S1' to start up-integration of the control voltage.

It has to be noted, that according to the flow diagram of Fig. 7, switching OFF of the synchronous rectifier S41' may be and should be, before it is determined in step S4' that the induction is ZERO.

The control method of a synchronous rectifier controller described with reference to Fig. 7 is applicable to any synchronous rectifier, which is rectifying a voltage provided by an inductor.

With reference to Figs. 1 to 8 the present invention has been explained using particular elements to implement a synchronous rectifier control method, a synchronous rectifier controller or a power converter using such synchronous rectifier controller. However, a person skilled in the art will appreciate that there are many possible implementations available in the art to realize the above-mentioned functions.

Even if in the examples shown in Figs. 5 and 6, MOS switch transistors are shown as synchronous rectifier switch transistors and main switch transistors on the primary side of the respective power converters, such transistors also can be bi-polar transistors or BI-MOS transistor as well.

The synchronous rectifier controller schematically shown in the block diagram of Fig. 3 may be implemented using logic circuits like TTL circuits or CMOS circuits. However, it can also be implemented using programmable logical circuits, ASICs or even a combination of hardware and software comprising a micro controller.

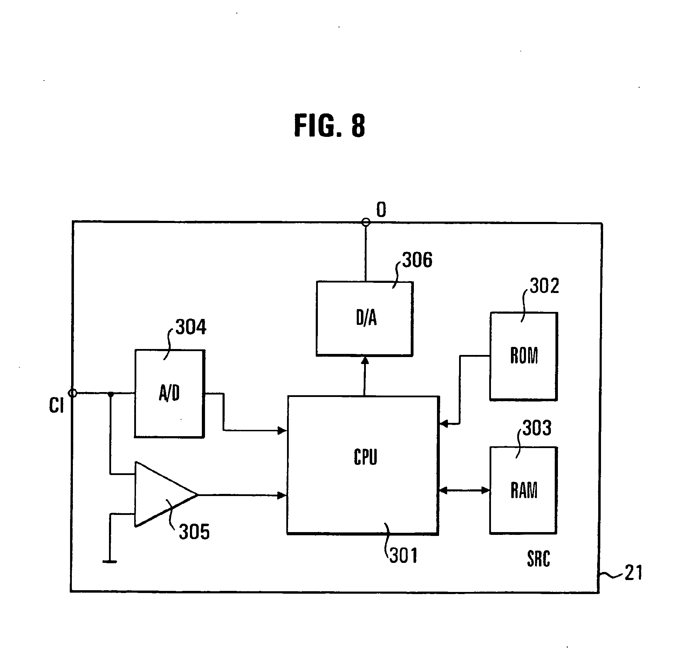

Turning now to fig. 8 showing a schematic block diagram of a SRC 21 utilizing a micro-controller arrangement. Such micro controller arrangement according to the embodiment shown in fig. 8 comprises a processing unit 301 having a main memory (RAM) 303 and a program memory 302 for storing at least one program instructing the processing unit 301 to execute the functions defined by the method according to the inventions. Further a analog digital converter (A/D converter) 304 is provided to convert analogue signals provided at a control input CI into digital values. Such A/D converter may convert the rectified control voltage, the absolute value of which is proportional to a voltage provided at the secondary winding of a transformer into a digital value. When a primary switch in the power converter according to one of circuits shown in Fig. 5 and 6 is switched on, i.e. during the magnetization phase of a transformer 1, 2, 3, the processing unit of the micro controller may continuously add up in an integrator register, an integrator memory or the like in the main memory 303 the digital values provided by the A/D converter 304 such that the result of the continuously added digital values increases continuously. This adding of digital voltage values is equivalent to the above-mentioned up-integration function.

To make the micro-controller information regarding the prefix of the voltage at the secondary winding available, a signal prefix detection means 305, in the embodiment shown in fig. 8 a comparator is provided comparing the signal provided at input CI, e.g. the above-mentioned analog control voltage with a threshold Uth (which will be most probably a negative value). This threshold Uth is chosen to ensure that the comparator output signal changes with the beginning of the magnetization phase of a transformer. The binary output information of such comparator will be provided to the micro controller to enable the possessing unit 301 to decide when summing of the measured values provided by the A/D converter 304 shall start. At the end of the magnetization phase, the result of the up added values reaches its maximum. At this time, the prefix of the control voltage changes again and using the above-mentioned comparator 305 or probably a comparator comparing the control voltage with ZERO voltage, a respective information regarding the beginning of the demagnetization phase of the transformer is made available to the possessing unit 301 of the micro-controller. With this change of the magnetization phase (into demagnetization, i.e. prefix change of the control voltage) the synchronous rectifier switch (not shown in fig. 8) will be controlled via a digital analog converter (D/A-converter) 306 and the output O to turn ON.

In parallel, on the prefix change of the control voltage, i.e. with the beginning of the demagnetization phase of a transformer, the possessing unit 301 starts beginning with the maximum value of the former adding up procedure to add down, (subtract) measured values provided by the above-mentioned A/D converter 304 continuously. This continuous subtraction of measured values is equivalent to the down integration mentioned above. The result of this calculation will continuously decrease until a predetermined threshold will be reached. Such threshold will be chosen to ensure that it will be reached sufficiently before the end of a demagnetization process in the transformer. If the result of the afore-mentioned calculation reaches that predetermined threshold, a control signal is outputted via the above-mentioned D/A converter 306 to turn OFF the synchronous rectifier switching means (not shown in fig. 8). Then, the integrator register, the integrator memory or the like in the main memory 303 will be reset to a predefined initial value. This resetting can for example be made depending on a signal available from the above-mentioned comparator 305 determining a prefix change at the end of the demagnetization phase of the transformer. With the beginning of the next magnetization period of the core of the transformer, the above-mentioned adding up in a integrator register, a memory or the like in the main memory 303 will start again.

By implementing a method according to the invention using a micro controller, the higher the signal processing speed of the possessing unit 301 and the A/D converter 304, the more precise will be the controlling of a synchronous rectifier switch.

In summary it has been shown, that by using a synchronous rectifier control method or a synchronous rectifier according to the invention, the control of the synchronous rectifier will be made within one magnetization cycle, i.e. cycle by cycle. An expected value is calculated (analogous or digitally) to determine the turn OFF time of a synchronous rectifier switch within the cycle of interest. Therefore, an integrator including its elements has only to be stable within one magnetization cycle. Changes of the output voltage, which influence the magnetization time of a transformer core, are taken into account by the transformer output voltage and also influence the transient timing of the synchronous rectifier switch.

As a result, to achieve the same security level with respect to avoidance of cross conduction or shoot-through between the input side and the output side of the power supply, the time between turning OFF a synchronous rectifier switch and turning ON a main switch of the power supply can be significantly shorter. As a result, the efficiency of such synchronous rectifier or a respective power supply making use of such synchronous rectifier will be significantly higher.

The embodiments described above are merely examples and it should be understood that it is of course possible to embody the invention in specific forms other than these described without departing from the scope of the invention as defined by the appended claims. Reference signs in the claims are given to increase the intelligibility of the claims and are not intended to limit the scope of the claims.

## Claims

1. Method for controlling a synchronous rectifier for rectifying a voltage supplied from an inductance (2; 2a), the induction of which being periodically built up and reduced, the rectifier comprising a switching means (20; 20b) for being switched ON to conduct a current supplied from said inductance (2; 2a) during a second time period of reduction of the induction, and for being switched OFF during a first time period of building up the induction of the inductance (2; 2a),
the method comprising the step of determining a stop time within said second time period for switching OFF said switching means (20; 20b), said stop time being derived based on a control voltage, the absolute value of which being proportional to said voltage supplied by said inductance (2; 2a),
**characterized in that** said determining step comprises the steps of:
a) detecting the induction value build up during said first time period by emulating the building up of said induction of the inductance (2; 2a) during said first time period to obtain an emulated quantity equivalent to an induction value of the particular first time period depending on the absolute value of the control voltage during this first time period;
b) determining the stop time for switching OFF said switching means (20; 20b) in the second time period succeeding said first time period of step a) depending on the induction value detected at the end of said first time period and the time variable absolute value of the control voltage during said second time period by
a1) emulating the reduction of the induction of the inductance (2; 2a) during the second time period succeeding said first time period of step a) depending on the emulated quantity achieved at the end of said first time period and the absolute value of the control voltage during said second time period; and
b1) determining the stop time based on the comparison result of said actual emulated quantity to the induction value during the second time period and a predetermined threshold.

2. Method for controlling a synchronous rectifier according to claim 1,
wherein step a) comprises integrating the absolute value of the control voltage over time during said first time period.

3. Method for controlling a synchronous rectifier according to claim 2,
wherein step a1) comprises integrating the absolute value of the control voltage over time during said second time period and subtracting the integration result from the final integration result of step a).

4. Method for controlling a synchronous rectifier according to claim 3,
wherein step b1) comprises determining the stop time based on the comparison result of the subtraction result of step a1) and a predetermined threshold (Uref).

5. Method for controlling a synchronous rectifier according to claim 1,
wherein step a) comprises converting the absolute value of the control voltage into a pulse train having a frequency depending on the value of the control voltage and counting up the pulses of said pulse train during said first time period to obtain an upper count value.

6. Method for controlling a synchronous rectifier according to claim 5,
wherein step a1) comprises converting the absolute value of the control voltage into a pulse train having a frequency depending on the value of the control voltage and counting down the pulses of said pulse train during said second time period with a start value depending on the upper count value of step a) .

7. Method for controlling a synchronous rectifier according to claim 6,
wherein step b1) comprises determining the stop time based on the comparison result of the count value achieved at step a1) and a predetermined threshold.

8. Method for controlling a synchronous rectifier according to one of the preceding claims;
the method further comprising before the step of determining a stop time, a step of determining a start time within said second time period for switching ON said switching means (20; 20b), said start time being derived from a polarity change of said control voltage.

9. Synchronous rectifier controller for controlling a synchronous rectifier for rectifying a voltage supplied from an inductance (2; 2a), the induction of which being periodically built up and reduced, the synchronous rectifier comprising a switching means (20; 20b) for being switched ON to conduct a current supplied from said inductance (2; 2a) during a second time period of reduction of the induction, and for being switched OFF during a first time period of building up the induction of the inductance (2; 2a), and the synchronous rectifier controller (21; 21a);
the synchronous rectifier controller (21; 21a) for determining a stop time within said second time period for switching OFF said switching means (20; 20b), said stop time being derived based on a control voltage, the absolute value of which being proportional to said voltage supplied by said inductance (2; 2a),
**characterized in that** said synchronous rectifier controller (21; 21a) comprises:
detecting means (101; 201, 202, 203, 204; 301, 304) arranged to detect the induction value build up during said first time period, said detecting means (101; 201, 202, 203, 204; 301, 304) comprising emulator means arranged to emulate the building up of said induction of the inductance (2; 2a) during said first time period to obtain an emulated quantity equivalent to an induction value of the particular first time period depending on the absolute value of the control voltage during this first time period;;
determining means (101, 104; 201, 202, 203, 204; 301, 304) arranged to determine the stop time for switching OFF said switching means (20; 20b) in the second time period succeeding said first time period depending on the induction value detected by the detecting means (101; 201, 202, 203, 204; 301, 304) at the end of said first time period and the time variable absolute value of the control voltage during said second time period, said determining means (101, 104; 201, 202, 203, 204; 301, 304) comprising:
emulator means (101; 201, 202, 203, 204; 301, 304) arranged to emulate the reduction of the induction of the inductance (2; 2a) during the second time period succeeding said first time period depending on the emulated quantity achieved at the end of said first time period and the absolute value of the control voltage during said second time period; and
comparator means (104; N2; 301) arranged to determining the stop time based on the comparison result of said actual emulated quantity to the induction value during the second time period and a predetermined threshold (Uref)..

10. Synchronous rectifier controller (21; 21a) according to claim 9, wherein
said emulator means of the detecting means (101; 201, 202, 203, 204; 301, 304) comprises an integrator means (101; 201, 202, 203, 204; 301, 303) arranged to integrate the absolute value of the control voltage over time during said first time period; and
said emulator means of the determining means (101, 104; 201, 202, 203, 204; 301, 304) comprises an integrator means (101; 201, 202, 203, 204; 301, 303) arranged to integrate the absolute value of the control voltage over time during said second time period, and subtraction means (101; 203, 204; 301, 303) arranged to subtract the integration result from the final integration result of said emulator means of the detecting means (101; 201, 202, 203, 204; 301, 304).

11. Synchronous rectifier controller (21; 21a) according to claim 10, further comprising means (102; 203, 206) for re-setting the integrator means of the detecting means (101; 201, 202, 203, 204) before starting integrating the absolute value of the control voltage in said first time period.

12. Synchronous rectifier controller (21; 21a) according to claim 9, wherein
said emulator means of the detecting means (201, 202, 203, 204) comprises a voltage-frequency converter (202) arranged to convert the absolute value of the control voltage into a pulse train having a frequency depending on the value of the control voltage and a first counter (203, 204) arranged to count up the pulses of said pulse train during said first time period to obtain an upper count value and
said emulator means of the determining means (201, 202, 203, 204) comprises a voltage-frequency converter (202) arranged to convert the absolute value of the control voltage into a pulse train having a frequency depending on the value of the control voltage and a second counter (203, 204) arranged to count down the pulses of said pulse train during said second time period with a start value depending on the upper count value of said first counter.

13. Synchronous rectifier controller (21; 21a) according to claim 12, further comprising means (203, 206) for re-setting the first counter (204) before starting counting up the pulses of said pulse train in said first time period.

14. Synchronous rectifier controller (21; 21a) according to one of claims 9 to 13, further comprising means for determining a start time within said second time period for switching ON said switching means (20; 20b), said start time being derived from a polarity change of said control voltage.

15. Synchronous rectifier controller (21; 21a) according to one of claims 9 to 14, wherein the synchronous rectifier is comprised in a power converter, the power converter comprising a main switch (10) being periodically switched ON and OFF depending on a pulse width modulated control signal from a PWM controller (11) to build up said induction and to reduce said induction, respectively.

16. Synchronous rectifier controller (21; 21a) according to claim 15,
wherein the power converter is one of a free running fly-back converter and a forward converter;
wherein said inductor comprises a transformer having a primary winding (1) and at least one secondary winding (2; 2a, 2b); and
wherein said control voltage is derived from the voltage provided at one of the at least one secondary windings (2; 2a, 2b) of the transformer.

17. Synchronous rectifier controller (21; 21a) according to claim 16,
wherein said voltage to be rectified is provided from a main secondary winding (2a) of the transformer, and
wherein said control voltage is derived from the voltage provided at an auxiliary secondary winding (2b) of the transformer.

18. Synchronous rectifier controller (21; 21a) according to claim 9,
wherein at least one of said detecting means and said determining means comprising:
a processing unit (301) having a program memory (302) and a main memory (303) for executing instructions stored in said program memory (302) to control said switching means (20; 20b));
an A/D converter (304) to convert the rectified control voltage into digital value to be provided to the processing unit (301);
means (305) arranged to inform the processing unit (301) regarding the prefix of a voltage provided at the secondary winding (2, 2a); and
means (306) arranged to provide a control signal for controlling said switching means (20, 20b) depending on a processing result of said processing unit (301).

## Patentansprüche

1. Verfahren zum Steuern eines synchronen Gleichrichters zum Gleichrichten einer Spannung, die von einer Induktivität (2; 2a) geliefert wird, wobei deren Induktion periodisch aufgebaut und reduziert wird, wobei der Gleichrichter ein Schaltmittel (20; 20b) umfasst, um auf AN geschaltet zu werden, um einen Strom zu leiten, der von der Induktivität (2; 2a) geliefert wird, in einer zweiten Zeitperiode der Reduzierung der Induktion, und um auf AUS geschaltet zu werden, in einer ersten Zeitperiode des Aufbaus der Induktion der Induktivität (2; 2a),
wobei das Verfahren den Schritt umfasst zum Bestimmen einer Stopp-Zeit in der zweiten Zeitperiode zum Ausschalten des Schaltmittels (20; 20b), wobei die Stopp-Zeit auf Grundlage einer Steuerspannung abgeleitet wird, deren Absolutwert proportional zu der durch die Induktivität (2; 2a) gelieferten Spannung ist,
**dadurch gekennzeichnet, dass** der Bestimmungsschritt die Schritte umfasst zum:
a) Erfassen des Induktivitätswerts, der in der ersten Zeitperiode aufgebaut wird, durch Emulieren des Aufbaus der Induktion der Induktivität (2; 2a) in der ersten Zeitperiode, um eine emulierte Quantität zu erhalten, die äquivalent zu einem Induktionswert der bestimmten ersten Zeitperiode ist, in Abhängigkeit von dem Absolutwert der Steuerspannung während dieser ersten Zeitperiode;
b) Bestimmen der Stopp-Zeit zum Ausschalten des Schaltmittels (20; 20b) in der zweiten Zeitperiode, die der ersten Zeitperiode des Schrittes a) folgt, in Abhängigkeit von dem Induktionswert, der an dem Ende der ersten Zeitperiode erfasst wird, und dem zeitlich variablen Absolutwert der Steuerspannung während der zweiten Zeitperiode, durch
a1) Emulieren der Reduktion der Induktion der Induktivität (2; 2a) in der zweiten Zeitperiode, die der ersten Zeitperiode des Schrittes a) folgt, in Abhängigkeit von der emulierten Quantität, die an dem Ende der ersten Zeitperiode erzielt wird, und dem Absolutwert der Steuerspannung während der zweiten Zeitperiode;
b1) Bestimmen der Stopp-Zeit auf Grundlage des Vergleichsresultats der tatsächlich emulierten Quantität für den Induktionswert während der zweiten Zeitperiode und einem vorbestimmten Schwellenwert.

2. Verfahren zum Steuern eines synchronen Gleichrichters nach Anspruch 1,
wobei Schritt a) ein Integrieren des Absolutwerts der Steuerspannung über eine Zeit während der ersten Zeitperiode umfasst.

3. Verfahren zum Steuern eines synchronen Gleichrichters nach Anspruch 2,
wobei Schritt a1) ein Integrieren des Absolutwerts der Steuerspannung über eine Zeit während der zweiten Zeitperiode und ein Subtrahieren des Integrationsresultats von dem Endintegrationsresultat im Schritt a) umfasst.

4. Verfahren zum Steuern eines synchronen Gleichrichters nach Anspruch 3,
wobei Schritt b1) ein Bestimmen der Stopp-Zeit auf Grundlage des Vergleichsresultats des Subtraktionsresultats des Schrittes a1) und einem vorbestimmten Schwellenwert (Uref) umfasst.

5. Verfahren zum Steuern eines synchronen Gleichrichters nach Anspruch 1,
wobei Schritt a) ein Wandeln des Absolutwerts der Steuerspannung in einen Pulszug umfasst, mit einer Frequenz, die von dem Wert der Steuerspannung abhängt, und ein Hochzählen der Pulse des Pulszuges in der ersten Zeitperiode, um einen oberen Zählwert zu erhalten.

6. Verfahren zum Steuern eines synchronen Gleichrichters nach Anspruch 5,
wobei Schritt a1) ein Wandeln des Absolutwerts der Steuerspannung in einen Pulszug umfasst, mit einer Frequenz, die von dem Wert der Steuerspannung abhängt, und ein Herunterzählen der Pulse des Pulszuges in der zweiten Zeitperiode mit einem Startwert, der von dem oberen Grenzwert des Schrittes a) abhängt.

7. Verfahren zum Steuern eines synchronen Gleichrichters nach Anspruch 6,
wobei Schritt b1) ein Bestimmen der Stopp-Zeit auf Grundlage des Vergleichsresultats des Zählwerts, der bei Schritt a1) erzielt wird, und eines vorbestimmten Schwellenwerts umfasst.

8. Verfahren zum Steuern eines synchronen Gleichrichters nach einem der vorherigen Ansprüche;
wobei das Verfahren ferner umfasst, vor dem Schritt zum Bestimmen einer Stopp-Zeit, einen Schritt zum Bestimmen einer Start-Zeit in der zweiten Zeitperiode zum Anschalten des Schaltmittels (20; 20b), wobei die Start-Zeit aus einer Polaritätsänderung der Steuerspannung abgeleitet wird.

9. Steuermittel für einen synchronen Gleichrichter, zum Steuern eines synchronen Gleichrichters zum Gleichrichten einer Spannung, die von einer Induktivität (2; 2a) geliefert wird, wobei deren Induktion periodisch aufgebaut und reduziert wird, und wobei der synchrone Gleichrichter ein Schaltmittel (20; 20b) umfasst, um auf AN geschaltet zu werden, um einen Strom zu leiten, der von der Induktivität (2; 2a) in einer zweiten Zeitperiode geliefert wird, zum Reduzieren der Induktion, und um in einer ersten Zeitperiode des Aufbaus der Induktion der Induktivität (2; 2a) auf AUS geschaltet zu werden, und die Steuereinheit des synchronen Gleichrichters (21; 21a);
wobei die Steuereinheit des synchronen Gleichrichters (21; 21a) ausgelegt ist zum Bestimmen einer Stopp-Zeit in der zweiten Zeitperiode zum Ausschalten des Schaltmittels (20; 20b), wobei die Stopp-Zeit auf Grundlage einer Steuerspannung abgeleitet wird, deren Absolutwert proportional zu der Spannung ist, die durch die Induktivität (2; 2a) geliefert wird,
**dadurch gekennzeichnet, dass** die Steuereinheit des synchronen Gleichrichters (21; 21a) umfasst:
ein Erfassungsmittel (101; 201 202, 203, 204; 201, 304), das ausgelegt ist zum Erfassen des Induktionswerts, der in der ersten Zeitperiode aufgebaut wird, wobei das Erfassungsmittel (101; 201, 202, 203, 204; 301, 304) ein Emulationsmittel umfasst, das ausgelegt ist zum Emulieren des Aufbaus der Induktion der Induktivität (2; 2a) in der ersten Zeitperiode, um eine emulierte Quantität zu erhalten, die äquivalent zu einem Induktionswert der bestimmten ersten Zeitperiode in Abhängigkeit von dem Absolutwert der Steuerspannung in dieser ersten Zeitperiode ist;
ein Bestimmungsmittel (101, 104; 201, 202, 203, 204; 301, 204), das ausgelegt ist zum Bestimmen der Stopp-Zeit zum Ausschalten des Schaltmittels (20; 20b) in der zweiten Zeitperiode, die der ersten Zeitperiode folgt, in Abhängigkeit von dem Induktionswert, der durch das Erfassungsmittel (101; 201, 202, 203, 204; 301, 304) abgeleitet wird, am Ende der ersten Zeitperiode, und dem zeitlich variablen Absolutwert der Steuerspannung in der zweiten Zeitperiode, wobei das Bestimmungsmittel (101, 104; 201, 202, 203, 204; 301, 304) umfasst:
ein Emulationsmittel (101; 201, 202, 203, 204; 301, 304), das ausgelegt ist zum Emulieren der Reduktion der Induktion der Induktivität (2; 2a) in der zweiten Zeitperiode, die der ersten Zeitperiode folgt, in Abhängigkeit von der emulierten Quantität, die am Ende der ersten Zeitperiode erzielt wird, und dem Absolutwert der Steuerspannung in der zweiten Zeitperiode; und
ein Vergleichsmittel (104; N2; 301), das ausgelegt ist zum Bestimmen der Stopp-Zeit auf Grundlage des Vergleichsresultats der tatsächlich emulierten Quantität für den Induktionswert während der zweiten Zeitperiode und einem vorbestimmten Schwellenwert (Uref).

10. Steuereinheit eines synchronen Gleichrichters (21; 21a) nach Anspruch 9, wobei
das Emulationsmittel des Erfassungsmittels (101; 201, 202, 203, 204; 301, 304) ein Integrationsmittel (101; 201, 202, 203, 204; 301, 303) umfasst, das ausgelegt ist zum Integrieren des Absolutwerts der Steuerspannung über eine Zeit während der ersten Zeitperiode; und
das Emulationsmittel des Erfassungsmittels (101, 104; 201, 202, 203, 204; 301, 304) ein Integrationsmittel (101; 201, 202, 203, 204; 301, 304) umfasst, das ausgelegt ist zum Integrieren des Absolutwerts der Steuerspannung über eine Zeit in der zweiten Zeitperiode, und ein Subtraktionsmittel (101; 203, 204; 301, 303) das ausgelegt ist zum Subtrahieren des Integrationsresultats von dem endgültigen Integrationsresultats des Emulationsmittels des Erfassungsmittels (101; 201, 202, 203, 204; 301, 304).

11. Steuereinheit eines synchronen Gleichrichters (21; 21a) nach Anspruch 10, ferner umfassend ein Mittel (102; 203, 206) zum Neueinstellen des Integrationsmittels des Erfassungsmittels (101; 201, 202, 203, 204) vor dem Start der Integration des Absolutwerts der Steuerspannung in der ersten Zeitperiode.

12. Steuereinheit eines synchronen Gleichrichters (21; 21a) nach Anspruch 9, wobei
das Emulationsmittel des Erfassungsmittels (201, 202, 203, 204) einen Spannungs-Frequenz-Wandler (202) umfasst, der ausgelegt ist zum Wandeln des Absolutwerts der Steuerspannung in einen Pulszug mit einer Frequenz, die von dem Wert der Steuerspannung abhängt, und einen ersten Zähler (203, 204), der ausgelegt ist zum Hochzählen der Pulse des Pulszuges in der ersten Zeitperiode, um einen oberen Zählwert zu erhalten, und
das Emulationsmittel des Bestimmungsmittels (201, 202, 203, 204) einen Spannungs-Frequenz-Wandler (202) umfasst, der ausgelegt ist zum Wandeln des Absolutwerts der Steuerspannung in einen Pulszug mit einer Frequenz, die von dem Wert der Steuerspannung abhängt, und einen zweiten Zähler (203, 204), der ausgelegt ist zum Herunterzählen der Pulse des Pulszuges während der zweiten Zeitperiode, mit einem Startwert, der von dem oberen Zählwert des ersten Zählers abhängt.

13. Steuereinheit eines synchronen Gleichrichters (21; 21a) nach Anspruch 12, ferner umfassend ein Mittel (203, 206) zum Neueinstellen des ersten Zählers (204) vor dem Start des Hochzählens der Pulse des Pulszuges in der ersten Zeitperiode.

14. Steuereinheit eines synchronen Gleichrichters (21; 21a) nach irgendeinem der Ansprüche 9 bis 13, ferner mit einem Mittel zum Bestimmen einer Start-Zeit in der zweiten Zeitperiode zum Anschalten des Schaltmittels (20; 20b), wobei die Start-Zeit aus einer Polaritätsänderung der Steuerspannung abgeleitet ist.

15. Steuereinheit eines synchronen Gleichrichters (21; 21a) nach irgendeinem der Ansprüche 9 bis 14, wobei der synchrone Gleichrichter einen Leistungswandler umfasst, wobei der Leistungswandler einen Hauptschalter (10) umfasst, der periodisch AN und AUS geschaltet wird, in Abhängigkeit von einem Pulsbreiten-modulierten Steuersignal von einer PWM-Steuereinheit (11), zum Aufbauen der Induktion bzw. zum Reduzieren der Induktion.

16. Steuereinheit eines synchronen Gleichrichters (21; 21a) nach Anspruch 15,
wobei der Leistungswandler ein freilaufender Fly-Back-Wandler oder ein Vorwärtswandler ist;
wobei die Induktivität einen Transformator umfasst, mit einer Primärwicklung (1) und zumindest einer zweiten Wicklung (2; 2a, 2b); und
wobei die Steuerspannung aus der Spannung abgeleitet wird, die an einer der zumindest einen sekundären Wicklungen (2; 2a, 2b) des Transformators bereitgestellt ist.

17. Steuereinheit eines synchronen Gleichrichters (21; 21a) nach Anspruch 16,
wobei die gleichzurichtende Spannung von einer sekundären Hauptwicklung (2a) des Transformators bereitgestellt wird, und
wobei die Steuerspannung aus der Spannung abgeleitet ist, die an einer zweiten Hilfswicklung (2b) des Transformators bereitgestellt ist.

18. Steuereinheit eines synchronen Gleichrichters (21; 21a) nach Anspruch 9,
wobei das Erfassungsmittel und/oder das Bestimmungsmittel umfassen:
eine Verarbeitungseinheit (301) mit einem Programmspeicher (302) und einem Hauptspeicher (303) zum Ausführen von Anweisungen, die in dem Programmspeicher (302) gespeichert sind, zum Steuern des Schaltmittels (20; 20b);
einen A/D-Wandler (304) zum Wandeln der gleichgerichteten Steuerspannung in einen digitalen Wert, der der Verarbeitungseinheit (301) bereitgestellt wird;
ein Mittel (305), das ausgelegt ist zum Benachrichtigen der Verarbeitungseinheit (301) bezüglich des Vorzeichens einer Spannung, die an der sekundären Wicklung (2, 2a) bereitgestellt wird, und
ein Mittel (306), das ausgelegt ist zum Bereitstellen eines Steuersignals zum Steuern des Schaltmittels (20, 20b) in Abhängigkeit von einem Verarbeitungsresultat der Verarbeitungseinheit (301).

## Revendications

1. Procédé de commande d'un redresseur synchrone permettant de redresser une tension fournie par une inductance (2 ; 2a), dont l'induction étant périodiquement accumulée et réduite, le redresseur comprenant un moyen de commutation (20 ; 20b) destiné à être commuté entre une position de MARCHE pour conduire un courant fourni par ladite inductance (2 ; 2a) pendant une deuxième durée de réduction de l'induction, et une position d'ARRET pendant une première durée d'accumulation de l'induction de l'inductance (2 ; 2a),
le procédé comprenant l'étape qui consiste à déterminer un temps d'arrêt dans ladite deuxième durée pour mettre ledit moyen de commutation (20 ; 20b) en position d'ARRET, ledit temps d'arrêt étant dérivé sur la base d'une tension de commande, dont la valeur absolue étant proportionnelle à ladite tension fournie par ladite inductance (2 ; 2a),
**caractérisé en ce que** ladite étape de détermination comprend les étapes qui consistent :
a) à détecter l'accumulation de la valeur d'induction pendant ladite première durée en émulant l'accumulation de la dite induction de l'inductance (2 ; 2a) pendant ladite première durée pour obtenir une quantité émulée équivalente à une valeur d'induction de la première durée particulière en fonction de la valeur absolue de la tension de commande pendant cette première durée ;
b) à déterminer le temps d'arrêt pour mettre ledit moyen de commutation (20 ; 20b) en position d'ARRET dans la deuxième durée suivant ladite première durée de l'étape a) en fonction de la valeur d'induction détectée à la fin de ladite première durée et de la valeur absolue variable dans le temps de la tension de commande pendant ladite deuxième durée
a1) en émulant la réduction de l'induction de l'inductance (2 ; 2a) pendant la deuxième durée suivant ladite première durée de l'étape a) en fonction de la quantité émulée atteinte à la fin de ladite première durée et de la valeur absolue de la tension de commande pendant ladite deuxième durée ; et
b1) à déterminer le temps d'arrêt sur la base du résultat de la comparaison de ladite quantité émulée effective à la valeur d'induction pendant la deuxième durée et d'un seuil prédéterminé.

2. Procédé de commande d'un redresseur synchrone selon la revendication 1,
dans lequel l'étape a) comprend le fait d'intégrer la valeur absolue de la tension de commande par rapport au temps pendant ladite première durée.

3. Procédé de commande d'un redresseur synchrone selon la revendication 2,
dans lequel l'étape a1) comprend le fait d'intégrer la valeur absolue de la tension de commande par rapport au temps pendant ladite deuxième durée et de soustraire le résultat de l'intégration du résultat d'intégration final de l'étape a).

4. Procédé de commande d'un redresseur synchrone selon la revendication 3,
dans lequel l'étape b1) comprend le fait de déterminer le temps d'arrêt sur la base du résultat de comparaison du résultat de soustraction de l'étape a1) et d'un seuil prédéterminé (Uref).

5. Procédé de commande d'un redresseur synchrone selon la revendication 1,
dans lequel l'étape a) comprend la conversion de la valeur absolue de la tension de commande en un train d'impulsions ayant une fréquence qui dépend de la valeur de la tension de commande et le comptage progressif des impulsions dudit train d'impulsions pendant ladite première durée afin d'obtenir une valeur de comptage supérieure.

6. Procédé de commande d'un redresseur synchrone selon la revendication 5,
dans lequel l'étape a1) comprend le fait de convertir la valeur absolue de la tension de commande en un train d'impulsions ayant une fréquence qui dépend de la valeur de la tension de commande et le comptage à rebours des impulsions dudit train d'impulsions pendant ladite deuxième durée avec une valeur de départ dépendant de la valeur de comptage supérieure de l'étape a).

7. Procédé de commande d'un redresseur synchrone selon la revendication 6,
dans lequel l'étape b1) comprend la détermination du temps d'arrêt sur la base du résultat de comparaison de la valeur de comptage atteinte à l'étape a1) et d'un seuil prédéterminé.

8. Procédé de commande d'un redresseur synchrone selon l'une des revendications précédentes ;
le procédé comprenant en outre, avant l'étape de détermination d'un temps d'arrêt, une étape qui consiste à déterminer un temps de départ dans ladite deuxième durée pour mettre ledit moyen de commutation (20 ; 20b) en position de MARCHE, ledit temps de départ étant dérivé d'un changement de polarité de ladite tension de commande.

9. Contrôleur pour un redresseur synchrone permettant de commander un redresseur synchrone pour redresser une tension fournie par une inductance (2 ; 2a), dont l'induction étant périodiquement accumulée et réduite, le redresseur synchrone comprenant un moyen de commutation (20 ; 20b) destiné à être commuté entre une position de MARCHE pour conduire un courant fourni par ladite inductance (2 ; 2a) pendant une deuxième durée de réduction de l'induction, et une position d'ARRET pendant une première durée d'accumulation de l'induction de l'inductance (2 ; 2a), et le contrôleur (21, 21a) pour un redresseur synchrone ;
le contrôleur (21 ; 21a) pour un redresseur synchrone permettant de déterminer un temps d'arrêt dans ladite deuxième durée pour mettre ledit moyen de commutation (20 ; 20b) en position d'ARRET, ledit temps d'arrêt étant dérivé sur la base d'une tension de commande, la valeur absolue étant proportionnelle à ladite tension fournie par ladite inductance (2 ; 2a),
**caractérisé en ce que** ledit contrôleur (21 ; 21a) pour un redresseur synchrone comprend :
un moyen de détection (101 ; 201, 202, 203, 204 ; 301, 304) agencé pour détecter l'accumulation de la valeur d'induction pendant ladite première durée, ledit moyen de détection (101 ; 201, 202, 203, 204 ; 301, 304) comprenant un moyen émulateur agencé pour émuler l'accumulation de ladite induction de l'inductance (2 ; 2a) pendant ladite première durée afin d'obtenir une quantité émulée équivalente à une valeur d'induction de la première durée particulière en fonction de la valeur absolue de la tension de commande pendant cette première durée ;
un moyen de détermination (101, 104 ; 201, 202, 203, 204 ; 301, 304) agencé pour déterminer le temps d'arrêt pour mettre ledit moyen de commutation (20 ; 20b) en position d'ARRET dans la deuxième durée suivant ladite première durée en fonction de la valeur détectée par le moyen de détection (101 ; 201, 202, 203, 204 ; 301, 304) à la fin de la première durée et de la valeur absolue variable dans le temps de la tension de commande pendant ladite deuxième durée, ledit moyen de détermination (101, 104 ; 201, 202, 203, 204 ; 301, 304) comprenant :
un moyen émulateur (101 ; 201, 202, 203 , 204 ; 301, 304) agencé pour émuler la réduction de l'induction de l'inductance (2 ; 2a) pendant la deuxième durée suivant ladite première durée en fonction de la quantité émulée atteinte à la fin de ladite première durée et de la valeur absolue de la tension de commande pendant ladite deuxième durée ; et
un moyen comparateur (104 ; N2 ; 301) agencé pour déterminer le temps d'arrêt sur la base du résultat de comparaison de ladite quantité émulée effective à la valeur d'induction pendant la deuxième durée et d'un seuil prédéterminé (Uref).

10. Contrôleur (21 ; 21a) pour un redresseur synchrone selon la revendication 9, dans lequel
ledit moyen émulateur du moyen de détection (101; 201, 202, 203, 204 ; 301, 304) comprend un moyen intégrateur (101 ; 201, 202, 203, 204 ; 301, 303) agencé pour intégrer la valeur absolue de la tension de commande par rapport au temps pendant ladite première durée ; et
ledit moyen émulateur du moyen de détermination (101, 104 ; 201, 202, 203, 204 ; 301, 304) comprend un moyen intégrateur (101, 201, 202, 203, 204, 301, 303) agencé pour intégrer la valeur absolue de la tension de commande par rapport au temps pendant ladite deuxième durée, et un moyen de soustraction (101 ; 201, 203, 204 ; 301, 303) agencé pour soustraire le résultat d'intégration du résultat d'intégration final dudit moyen émulateur du moyen de détection (101 ; 201, 202, 203, 204 ; 301, 304).

11. Contrôleur (21 ; 21a) pour un redresseur synchrone selon la revendication 10, comprenant en outre un moyen (102 ; 203, 206) pour réinitialiser le moyen intégrateur du moyen de détection (101 ; 201, 202, 203, 204) avant le démarrage de l'intégration de la valeur absolue de la tension de commande dans ladite première durée.

12. Contrôleur (21 ; 21a) pour un redresseur synchrone selon la revendication 9, dans lequel
ledit moyen émulateur du moyen de détection (201, 202, 203, 204) comprend un convertisseur tension-fréquence (202) agencé pour convertir la valeur absolue de la tension de commande en un train d'impulsions ayant une fréquence dépendant de la valeur de la tension de commande et un premier compteur (203, 204) agencé pour compter en progressant les impulsions dudit train d'impulsions pendant ladite première durée afin d'obtenir une valeur de comptage supérieure et
ledit moyen émulateur du moyen de détermination (201, 202, 203, 204) comprend un convertisseur tension-fréquence (202) agencé pour convertir la valeur absolue de la tension de commande en un train d'impulsions ayant une fréquence dépendant de la valeur de la tension de commande et un deuxième compteur (203, 204) agencé pour décompter les impulsions dudit train d'impulsions pendant ladite deuxième durée avec une valeur de départ dépendant de la valeur de comptage supérieure dudit premier compteur.

13. Contrôleur (21 ; 21a) pour un redresseur synchrone selon la revendication 12, comprenant en outre un moyen (203, 206) pour réinitialiser le premier compteur (204) avant de commencer le comptage progressif des impulsions dudit tarin d'impulsions dans ladite première durée.

14. Contrôleur (21 ; 21a) pour un redresseur synchrone selon l'une des revendications 9 à 13, comprenant en outre un moyen pour déterminer un temps de départ dans ladite deuxième durée pour mettre ledit moyen de commutation (20 ; 20b) en position de MARCHE, ledit temps de départ étant dérivé d'un changement de polarité de ladite tension de commande.

15. Contrôleur (21 ; 21a) pour un redresseur synchrone selon l'une des revendications 9 à 14, dans lequel le redresseur synchrone est compris dans un convertisseur de puissance, le convertisseur de puissance comprenant un commutateur principal (10) étant périodiquement mis en position de MARCHE et d'ARRET en fonction d'un signal de commande modulé en largeur d'impulsion à partir d'un contrôleur PWM (11) pour accumuler ladite induction et pour réduire ladite induction, respectivement.

16. contrôleur (21 ; 21a) pour un redresseur synchrone selon la revendication 15,
dans lequel le convertisseur de puissance est l'un d'un convertisseur indirect de fréquence non synchronisée et d'un convertisseur direct ;
dans lequel ladite bobine d'inductance comprend un transformateur ayant un enroulement primaire (1) et au moins un enroulement secondaire (2 ; 2a, 2b) ; et
dans lequel ladite tension de commande est dérivée de la tension fournie au niveau de l'au moins un enroulement secondaire (2 ; 2a, 2b) du transformateur.

17. Contrôleur (21 ; 21a) pour un redresseur synchrone selon la revendication 16,
dans lequel ladite tension à redresser est fournie à partir d'un enroulement secondaire principal (2a) du transformateur, et
dans lequel ladite tension de commande est dérivée de la tension fournie au niveau d'un enroulement secondaire auxiliaire (2b) du transformateur.

18. Contrôleur (21 ; 21a) pour un redresseur synchrone selon la revendication 9,
dans lequel au moins l'un dudit moyen de détection et dudit moyen de détermination comprenant :
une unité de traitement (301) ayant une mémoire de programme (302) et une mémoire principale (303) pour exécuter des instructions stockées dans ladite mémoire de programme (302) afin de commander ledit moyen de commutation (20 ; 20b) ;
un convertisseur A/N (304) pour convertir la tension de commande redressée en valeur numérique à fournir à l'unité de traitement (301) ;
un moyen (305) agencé pour informer l'unité de traitement (301) du préfixe d'une tension fournie au niveau de l'enroulement secondaire (2 ; 2a) ; et
un moyen (306) agencé pour fournir un signal de commande pour commander ledit moyen de commutation (20 ; 20b) en fonction d'un résultat de traitement de ladite unité de traitement (301).
